# EUROPÄISCHE PATENTSCHRIFT

(11) **EP 3 227 209 B1**
(45) Veröffentlichungstag und Bekanntmachung des Hinweises auf die Patenterteilung: **28.07.2021**
(21) Anmeldenummer: 15813025.2
(22) Anmeldetag: 15.12.2015
(51) Int. Cl.: B65G 35/06, B65G 54/02, B26D 7/32, B65G 47/38

(54) **BEWEGUNGSVORRICHTUNG**
MOVEMENT DEVICE
DISPOSITIF DE DÉPLACEMENT

(30) Priorität: 18.12.2014 DE 102014119110
(43) Veröffentlichungstag der Anmeldung: 11.10.2017
(73) Patentinhaber: Weber Maschinenbau GmbH Breidenbach, 35236 Breidenbach (DE)
(72) Erfinder: BURK, Alexander, 35232 Dautphetal (DE); ECKHARDT, Christoph, 35236 Breidenbach (DE); GERLACH, Jochen, 35232 Dautphetal (DE); NICHAU, Marco, 57334 Bad Laasphe (DE); NISPEL, Thomas, 35232 Dautphetal (DE); ROTHER, Ingo, 35236 Breidenbach (DE); VON KEUDELL, Leopold, 88682 Salem (DE); ZECHER, Steffen, 35460 Staufenberg (DE)
(74) Vertreter: Manitz Finsterwald Patent- und Rechtsanwaltspartnerschaft mbB
(86) Internationale Anmeldenummer: PCT/EP2015/079791
(87) Internationale Veröffentlichungsnummer: WO 2016/096856

(56) Entgegenhaltungen:
- EP-A1- 0 137 179
- EP-A1- 1 123 886
- EP-A1- 2 389 330
- WO-A2-2005/110898
- DE-A1- 3 711 688
- DE-A1-102006 034 395

## Beschreibung

Die Erfindung betrifft eine Vorrichtung zum Bewegen von Objekten. Bei den Objekten kann es sich beispielsweise um Pakete, Bauteile, z.B. aus dem Automobilbereich, Werkzeuge, z.B. Schrauben, Nägel, Dübel, oder fertiggestellte oder unvollständige Produkte jeglicher Art handeln. Insbesondere kann es sich bei den Produkten um Portionen handeln, die jeweils wenigstens eine von einem Lebensmittelprodukt abgetrennte Scheibe umfassen. Das Abtrennen kann mit Hilfe einer Aufschneidevorrichtung, insbesondere eines Hochleistungs-Slicers, mit einem planetarisch und/oder rotatorisch umlaufenden Kreis- oder Sichelmesser erfolgen.

Die Objekte, z.B. Schrauben oder Lebensmittelportionen, können insbesondere bereits in Teile einer Verpackung, z.B. Trays, eingelegt sein.

Die Bewegungsvorrichtung umfasst eine Mehrzahl individuell bewegbarer Transportmover zum Transport der Objekte. Ferner umfasst die Bewegungsvorrichtung ein Bahnsystem für die Transportmover, in welchem die Transportmover entlang wenigstens einer vorgegebenen Bahn in einer Transportrichtung bewegbar sind, und eine Steuereinrichtung zum Steuern der Bewegung der Transportmover in dem Bahnsystem, wobei die Transportmover jeweils zumindest einen mit dem Bahnsystem zusammenwirkenden Läufer und wenigstens einen am Läufer angebrachten Träger für Objekte umfassen.

Ein für die Erfindung grundsätzlich verwendbares Transportsystem, auf das hiermit im Hinblick auf das Erfordernis der Ausführbarkeit der Erfindung ausdrücklich Bezug genommen wird, wird von der Firma MagneMotion Inc. mit Sitz in Devens, Massachusetts, USA, angeboten. Dieses System basiert auf einem sogenannten LSM-Antrieb, also auf einem Antrieb durch lineare Synchronmotoren, der von einem sogenannten linearen Induktionsmotor (LIM-Antrieb) zu unterscheiden ist. Im Unterschied zu einem LIM-Antrieb wird bei einem LSM-Antrieb ein Magnetfeld nicht mittels des sogenannten elektromagnetischen Wanderfeldes induziert, sondern das Magnetfeld wird durch Permanentmagnete bereitgestellt. Wenn der Läufer des Linearmotors die Permanentmagnete trägt und der Stator des Linearmotors das elektromagnetische Wanderfeld erzeugt, dann kann man sich das Antriebsprinzip eines LSM-Antriebs bildlich so vorstellen, dass der mit dem Permanentmagneten versehene Transportmover von dem sich längs des Stators bewegenden Magnetfeld über die Transportstrecke gezogen wird. Ein solches Transportsystem bzw. Antriebsprinzip ist beispielsweise in WO 2003/029651 A2 und WO 2010/085670 A1 beschrieben. Auf diese Dokumente wird hiermit bezüglich der Offenbarung eines möglichen Antriebs- bzw. Funktionsprinzips für die Erfindung ausdrücklich Bezug genommen.

Das Bahnsystem bzw. die einzelnen Bahnen eines solchen Transportsystems können in eine Vielzahl aufeinanderfolgender Bahnelemente unterteilt werden, die gewissermaßen jeweils einen Einzel-Linearmotor bilden und von einer Steuereinrichtung individuell ansteuerbar sind. Wenn gleichzeitig die im Bahnsystem befindlichen Transportmover mittels der Steuereinrichtung identifizierbar sind, dann können auf diese Weise grundsätzlich beliebig viele Transportmover gleichzeitig in einem grundsätzlich beliebig komplexen Bahnsystem betrieben und dabei individuell bewegt werden.

Für die Identifizierung bzw. Lokalisierung der einzelnen Transportmover im Bahnsystem verwendet die vorstehend erwähnte Firma MagneMotion Inc. eine Technik, bei der jeder Transportmover mit einem Transducer versehen ist, der in den vom Bahnsystem gebildeten Stator ein Signal induziert, wodurch es der Steuereinrichtung ermöglicht wird, die exakte Position des Transportmovers mit einer von der Größe des Gesamtsystems abhängigen Genauigkeit von Bruchteilen eines Millimeters oder Bruchteilen eines Zentimeters zu bestimmen. Ein Vorteil dieses Systems besteht darin, dass keine externen Sensoren benötigt werden. Bei dem Steuersystem der Firma MagneMotion Inc. ist außerdem durch eine Unterteilung der Bahnen in eine Vielzahl von - gewissermaßen jeweils einen Einzel-Linearmotor darstellenden - Bahnelementen sichergestellt, dass keine Kollisionen zwischen aufeinanderfolgenden Transportmovern auftreten. So kann ein Transportmover nur dann in das nächste Bahnelement einfahren, wenn dies von der Steuereinrichtung gestattet wird, was insbesondere dann nicht der Fall ist, wenn sich ein anderer Transportmover in dem Bahnelement befindet.

Weitere aus dem Stand der Technik bekannte Transportsysteme sind in den Dokumenten DE 37 11 688 A1, DE 10 2006 034395 A1, EP 1 123 886 A1, WO 2005/110898 A2, EP 0 137 179 A1 und EP 2 389 330 A1 zu finden.

Vor dem Hintergrund dieses grundsätzlich bekannten Transportsystems ist bei der Erfindung in einem möglichen Ausführungsbeispiel vorgesehen, dass das Bahnsystem als Stator des Linearmotors ausgebildet ist.

Insbesondere ist der Läufer jeweils ein Bestandteil eines linearen Synchronmotors, wobei insbesondere der Läufer zumindest einen Permanentmagneten umfasst und das Bahnsystem als Motorstator ausgebildet ist.

Insbesondere ist das Bahnsystem in eine Vielzahl von, insbesondere jeweils einen Einzel-Linearmotor darstellenden, Bahnelementen unterteilt, die von der Steuereinrichtung individuell ansteuerbar sind.

Die Transportmover sind vorzugsweise von der Steuereinrichtung identifizierbar.

Des Weiteren sind die Transportmover vorzugsweise von der Steuereinrichtung im Bahnsystem lokalisierbar.

Das Transportsystem weist eine Mehrzahl von Transportmovern auf, deren Gesamtanzahl von der jeweiligen Anwendung abhängig ist. Es kann vorgesehen sein, dass das Bahnsystem mehrere Dutzende bis einige Hundert Transportmover umfasst, d.h. es kann gewissermaßen ein regelrechter "Schwarm" von Transportmovern im Bahnsystem vorhanden sein, um eine Vielzahl von Objekten zu transportieren und gegebenenfalls Zusatzfunktionen durchzuführen wie z.B. eine Pufferung, ein Verteilen und/oder ein Zuordnen von Objekten, insbesondere Portionen. Herkömmliche Träger nehmen die Objekte in einer mittigen Position oberhalb des Läufers auf. So können im Lebensmittelsektor beispielsweise Schneidreste oder Schneidabfälle auf die Bahn gelangen. Bei anderen Anwendungen können beispielsweise Papierreste, Holzspäne, Metallteile, z.B. Schraubenteile, Fluide oder Plastikreste auf die Bahn gelangen. Dies ist im Wesentlichen dadurch begründet, dass die Objekte oberhalb des Läufers und somit auch oberhalb eines verschmutzungsempfindlichen Stators und/oder zugeordneter Führungen des Bahnsystems angeordnet sind. Zudem besteht bei herkömmlichen Trägern das Problem, dass diese auf dem Läufer nicht starr fixiert sind, sondern ein bestimmtes Spiel aufweisen. Dadurch kann es insbesondere bei der Aufnahme von Objekten bzw. bei der Abgabe von Objekten zu störenden Bewegungen des Trägers, insbesondere zu einem unerwünschten "Wackeln" des Trägers, relativ zum Läufer kommen.

Es ist daher eine Aufgabe der Erfindung, eine Bewegungsvorrichtung für Produkte zu schaffen, welche eine verbesserte Anordnung zumindest eines Teils eines Trägers relativ zum Läufer aufweist.

Die Lösung dieser Aufgabe erfolgt durch die Vorrichtung mit den Merkmalen des unabhängigen Anspruchs.

Gemäß einem Aspekt der Erfindung befindet sich der Träger in einer Auskragposition, in welcher der Träger wenigstens mit einem Aufnahmebereich für die Objekte seitlich auskragt. Insbesondere ist der Aufnahmebereich hierbei bezüglich der Bahn bzw. des Läufers des Transportmovers ausgekragt. Der Aufnahmebereich ist vorzugsweise ein Trag-, Lastaufnahme- bzw. Lastabgabebereich, also ein Bereich, in welchem die Objekte aufgenommen, gehandhabt, getragen und/oder abgebeben werden. Vorzugsweise handelt es sich bei dem Aufnahmebereich um eine Aufnahmefläche für die Objekte.

Insbesondere kann der Träger nur an einer einzigen Seite auskragen. Grundsätzlich ist es jedoch auch denkbar, dass der Träger mehrere Aufnahmebereiche, welche seitlich auskragen, aufweist. Aufgrund des Aufnahmebereichs ist der Träger vorzugsweise unsymmetrisch bezüglich der Bahn, insbesondere des Stators, bzw. des Läufers.

Der Aufnahmebereich kann erfindungsgemäß insbesondere durch verschmutzungsempfindliche Bereiche, z.B. in Aufnahme- oder Abnahmebereichen für die Objekte, bewegt werden, während der Läufer bzw. die Bahn seitlich dazu versetzt geführt wird. Verschmutzungen gelangen somit nicht zum Läufer bzw. zur Bahn. Die Anordnung des Trägers relativ zur Bahn kann auf diese Weise deutlich verbessert werden.

Weiterbildungen der Erfindung sind auch den abhängigen Ansprüchen, der Beschreibung sowie den beigefügten Zeichnungen zu entnehmen.

Gemäß einer Ausführungsform ist in der Auskragposition der Aufnahmebereich seitlich versetzt zu einem Stator des Bahnsystems, zum Läufer und/oder zu einer Führung für den Transportmover angeordnet. Bei der Führung kann es sich insbesondere um einen Teil der Bahn handeln. Vorzugsweise umfasst die Führung Führungsschienen, insbesondere ein Paar von Schienen. Die Objekte können vorzugsweise seitlich auf den auskragenden Bereich des Trägers aufgelegt und darauf transportiert werden. Der Läufer und/oder das Bahnsystem, insbesondere der Stator und/oder die Führung für die Transportmover, ist auf diese Weise räumlich von den Objekten getrennt. Verschmutzungen und, insbesondere äußere, Einflüsse bei der Handhabung von Objekten werden dadurch vom Läufer sowie dem Bahnsystem ferngehalten. Verschmutzungen sind insbesondere im Bereich der Führung nachteilig, da diese die Bewegungen der Transportmover auf dem Bahnsystem beeinträchtigen und möglicherweise zu einem Blockieren der Transportmover führen können. Generell führen Ablagerungen in fester und flüssiger Form zu einer aufwändigeren Reinigung.

Erfindungsgemäß befindet sich der Träger permanent in der Auskragposition. Der Träger kann beispielsweise als festes Bauteil ausgebildet und starr am Läufer angeordnet sein. Diese Variante ist besonders kostengünstig zu realisieren. Alternativ, gemäß einem nicht durch die Erfindung abgedeckten Beispiel, kann der Träger auch beweglich ausgebildet sein, so dass zumindest der Aufnahmebereich in die Auskragposition bewegt, insbesondere verschoben, werden kann. So kann sich der Träger insbesondere lediglich in verschmutzungsempfindlichen Bereichen der Bahn oder in Funktionsbereichen, z.B. in Reinigungsbereichen oder Übergabebereichen zur Übergabe der Objekte, in der Auskragposition befinden. Bewegt sich der Transportmover hingegen normal auf dem Bahnsystem, so kann der Träger beispielsweise in eine mittige Position überführt werden, so dass sich die Objekte, insbesondere mittig, oberhalb des Läufers bzw. der Bahn und/oder in der optimalen Schwerpunktlage befinden können. Vorteilhaft ist dies insbesondere in für die Praxis relevanten Anwendungen, bei denen beim normalen Transport die Gefahr von Verschmutzungen eher gering ist und der Träger in einer mittigen Position stabiler angeordnet ist als in der Auskragposition.

Gemäß einem weiteren nicht zur Erfindung gehörendem Beispiel ist der Träger, insbesondere automatisch, aus einer Normalposition, in der der Träger zumindest im Wesentlichen mittig über einem Stator des Bahnsystems und/oder über dem Läufer angeordnet ist, in die Auskragposition verstellbar, insbesondere verschiebbar. Vorzugsweise kann der Träger rechtwinklig zum Bahnverlauf verschoben werden. Die mittige Anordnung kann sich sowohl auf die Abmessungen des Trägers als auch auf die Schwerpunktlage von Träger und Objekt beziehen. Die Verschiebung des Trägers aus der Normalposition in die Auskragposition kann insbesondere durch einen Einfluss von außen erfolgen. Hierbei sind beispielsweise Führungen denkbar, welche den Träger verschieben. Neben mechanischen Leitsystemen sind auch beispielsweise Magnete denkbar, welche den Aufnahmebereich nach außen ziehen.

Grundsätzlich ist es jedoch auch denkbar, dass der Transportmover selbst einen Mechanismus aufweist, mit dem der Träger in die Auskragposition verstellt und/oder auch aus dieser zurückgeholt werden kann.

Gemäß einem weiteren nicht zur Erfindung gehörenden Beispiel ist der Träger relativ zum Läufer zumindest vorübergehend drehbar gelagert. Insbesondere kann der Träger hierbei in Abhängigkeit von der Position oder von dem Bereich auf der Bahn verstellt werden, vorzugsweise in Kurvenbereichen.

Erfindungsgemäß ist zumindest abschnittsweise wenigstens eine Führung für den Träger vorgesehen, wobei insbesondere die Führung für den Träger von einer Führung für den Läufer verschieden ist. Der Träger, insbesondere der seitlich auskragende Aufnahmebereich des Trägers, kann somit abgestützt werden. Dies ist insbesondere bei vergleichsweise schweren Objekten sinnvoll. Die Leistungsfähigkeit des Magnetfördersystems kann durch die erhöhte Nutzlast erhöht werden.

Die Führung für den Träger kann im gesamten Bahnsystem erfolgen. Alternativ ist es auch denkbar, dass die Führung für den Träger lediglich in bestimmten Teilbereichen der Bahn vorgesehen ist, insbesondere in Bereichen, in denen sich Objekte auf dem Träger befinden, in verschmutzungsempfindlichen Bereichen und/oder in Funktionsbereichen. Auch in Kurvenbereichen kann eine Führung für den Träger sinnvoll sein, so dass der Träger bzw. die darauf befindlichen Objekte sicher geführt werden können.

Die Führung für den Träger kann insbesondere einen runden, eckigen, winkligen und/oder trapezförmigen Querschnitt aufweisen. Insbesondere kann die Führung eine Führungsschiene aufweisen. Vorzugsweise kann die Führung seitlich angeordnet sein. Insbesondere kann die Führung parallel zur Bahn verlaufen. Vorzugsweise kann die Führung an der Bahn oder an einem Untergestell der Bahn fixiert sein.

Gemäß einer weiteren Ausführungsform wirkt die Führung für den Träger mit einem seitlich auskragenden Bereich des Trägers, insbesondere dessen Endbereich, zusammen. So kann die Führung vorzugsweise auf der Seite der Auskragung, d.h. des Aufnahmebereichs, angeordnet sein, um somit ein darauf befindliches Objekt bzw. den auskragenden Aufnahmebereich des Trägers selbst abzustützen.

Nach einer weiteren Ausführungsform wirkt die Führung mit mindestens einem nicht-auskragenden seitlichen Bereich des Trägers zusammen. Dabei ist beispielsweise denkbar, dass an beiden Seiten des Trägers jeweils eine Führung vorgesehen ist. Alternativ kann auch nur auf der nicht-auskragenden Seite die Führung vorgesehen sein, wenn z.B. von der anderen Seite beispielsweise eine Abnahme der Objekte, insbesondere durch ein Untergreifen mit einer Gabel einer Roboter-Schaufel, erfolgt.

Gemäß einer weiteren Ausführungsform umfasst der Träger eine Haltevorrichtung, welche mit der Führung zusammenwirkt und insbesondere die Führung zumindest teilweise umgreift und/oder auf der Führung aufliegt und/oder an der Führung anliegt. Der Träger kann somit sicher an der Führung geführt werden.

Nach einer weiteren Ausführungsform umfasst die Haltevorrichtung ein Rollmittel und/oder einen Gleitabschnitt mit einem reibungsvermindernden Material. Bei dem Rollmittel kann es sich insbesondere um Rollen und/oder Räder handeln. Das reibungsvermindernde Material kann beispielsweise ein Kunststoffmaterial umfassen. Ein Gleitabschnitt ist insbesondere dann ausreichend, wenn nur eine vergleichsweise kurze Teilstrecke auf der Bahn zu überbrücken ist. Der Träger kann mit Hilfe der Rollmittel bzw. des Gleitabschnitts im Wesentlichen reibungsfrei an der Führung geführt werden.

Gemäß einem weiteren Ausführungsbeispiel der Erfindung ist der Transportmover mit einem Gegengewicht zum Ausgleichen des Aufnahmebereichs versehen. Insbesondere ist das Gegengewicht am Träger oder an einer Halterung oder Traverse für den Träger angebracht. Das Gegengewicht braucht folglich nicht direkt am Träger angebracht zu sein. Bevorzugt ist am Mover bzw. Läufer des Movers eine Halterung oder Traverse vorgesehen, die einen auskragenden Bereich besitzt, an welchem der dann auf diese Weise auskragende, mit dem Aufnahmebereich für die Objekte versehene Täger angebracht ist.

Bevorzugt ist das Gegengewicht zur Anpassung an ein auszugleichendes Gewicht veränderbar.

Gemäß einer weiteren Ausführungsform ist der Träger an einem nicht-auskragenden seitlichen Bereich mit mindestens einem Gegengewicht versehen. Das Gegengewicht kann insbesondere im, am, auf bzw. unter dem Träger angeordnet sein. Durch das Gegengewicht kann ein Ausgleich zum auskragenden Aufnahmebereich geschaffen werden. Der Schwerpunkt des Trägers befindet sich hierbei vorzugsweise oberhalb des Läufers bzw. des Stators der Bahn, und zwar insbesondere auch dann, wenn ein Objekt auf dem Aufnahmebereich platziert ist.

Nach einer weiteren Ausführungsform ist die Größe des Gegengewichts und/oder die Position des Gegengewichts relativ zum Träger zur Anpassung an das Gewicht des auf dem Träger befindlichen Objekts veränderbar. Insbesondere kann das Gegengewicht hierbei verschiebbar, steckbar und/oder magnetisch befestigbar sein. Auch kann der Träger drehbar ausgebildet sein, wodurch ebenfalls ein Ausgleich des Gewichts erfolgen kann. Vorzugsweise kann der Träger gewendet werden, so dass das Gewicht symmetrisch zur Bahn steht.

Insbesondere kann das Gegengewicht durch ein innerhalb des Trägers umströmendes, sich verlagerndes Fluid, insbesondere eine Flüssigkeit, veränderbar sein. Das Gegengewicht kann sich auf diese Weise vorzugsweise automatisch an das Gewicht des Objekts anpassen und die erforderliche Position annehmen.

Gemäß einer weiteren Ausführungsform ist der Träger und/oder das Gegengewicht, insbesondere automatisch, vorzugsweise bei bewegtem Transportmover, vom Läufer abnehmbar. Insbesondere können unterschiedliche Träger mit verschiedenen Gegengewichten bzw. verschiedenen Schwerpunkten vorgesehen sein. Die Träger können jeweils passend zum zu transportierenden Objekt gewählt werden. Der Träger bzw. das Gegengeweicht kann beispielsweise lösbar auf den Läufer bzw. den Träger gesteckt, geklickt, geschoben und/oder geschraubt werden. Auch eine magnetische Verbindung zwischen dem Träger und dem Läufer bzw. dem Gegengewicht und dem Träger ist grundsätzlich denkbar. Der Träger kann hierbei manuell oder automatisch entfernt werden.

Nach einer weiteren Ausführungsform ist der abgenommene Träger zumindest vorübergehend durch einen zusätzlich zum Bahnsystem vorgesehenen Antrieb förderbar, wobei insbesondere der Antrieb die Führung auf einem entsprechenden Abschnitt der Bahn übernimmt. Der abgenommene Träger kann insbesondere mit Hilfe eines sich bewegenden Förderbands transportiert werden.

Gemäß einer weiteren Ausführungsform verläuft ein Teilbereich der Bahn neben einem verschmutzungsgefährdeten Bereich und/oder einem Funktionsbereich. Die Auskragung, d.h. der Aufnahmebereich des Trägers, kann somit insbesondere in den verschmutzungsgefährdeten Bereich, z.B. einen Bereich, in dem Objekte aufgenommen bzw. abgegeben werden, ragen. Auch kann die Auskragung in einen Funktionsbereich, z.B. einen Reinigungsbereich oder Übergabebereich, ragen, während die Bahn seitlich zu diesem Funktionsbereich versetzt verlaufen kann. In dem Funktionsbereich können die Objekte behandelt, gehandhabt, aufgenommen und/oder abgegeben werden. Die Bahn wird daher stets in einem bestimmten Abstand von verschmutzungsgefährdeten Bereichen bzw. Funktionsbereichen geführt, so dass keine Verschmutzungen auf die Bahn selbst gelangen.

Nach einer weiteren Ausführungsform ist eine Abdeckung vorgesehen, welche einen einem seitlich auskragenden Bereich des Trägers zugewandten Bereich des Läufers seitlich abdeckt. Auf diese Weise kann eine Trennung bzw. Abschirmung zwischen einem Elektronikabschnitt oder elektrotechnischen Bereich einerseits und dem Träger andererseits geschaffen werden. Verschmutzungen bleiben somit im Bereich der Objekte und werden nicht auf die Bahn übertragen.

Dies ist insbesondere auch bei vertikalen Bahnsystemen vorteilhaft. Auch hierbei kann durch die Abdeckung eine Trennung zwischen dem elektrotechnischen Bereich und dem Bereich der Objekte erfolgen. Die Objekte können somit stets neben dem Bahnsystem gefördert werden.

Zur Übergabe der Objekte zwischen einem horizontalen und einem vertikalen Bahnsystem können die Objekte abgekämmt werden. Die horizontalen Streckenabschnitte können z.B. im Aufschneidebereich und im Übergabebereich an eine Verpackungsvorrichtung vorhanden sein. Dazwischen kann ein vertikales System z.B. einen Verteil- und/oder Pufferbereich bilden. Im vertikalen System vereinfacht sich insbesondere der Aufbau, z.B. die Abdichtung, da der Arbeitsbereich und der elektrotechnische Bereich hierbei einfach voneinander getrennt werden können. Vorteilhaft ist ferner, dass ein derartiger Puffer flexibel ist und die Objekte nicht nach der Reihenfolge ihres Eintreffens wieder entnommen werden müssen. Ferner können die Transportmover in einem vertikalen System auf unterschiedlichen Höhenniveaus bewegt werden. So können sich Objekte abgebende Bahnen einerseits und Objekte aufnehmende Bahnen andererseits in unterschiedlichen Höhen befinden. Dies kann hilfreich sein, falls ein Anlagenteil eine bestimmte Bauhöhe erfordert. Durch das vertikale System muss nicht die gesamte Anlage erhöht gebaut werden, was zu ergonomischen Nachteilen führen würde. Bei herkömmlichen Förderbandsystemen erfordern unterschiedliche Höhenniveaus lange schräge Bänder. Durch das erfindungsgemäße Bahnsystem mit zumindest vertikalen Abschnitten kann das Layout des Bahnsystems dagegen im Hinblick auf eine Platzersparnis und eine flexible Anordnung angepasst werden.

Gemäß einem weiteren Ausführungsbeispiel der Erfindung ist zumindest ein Paar von zusammenwirkenden Transportmovern vorgesehen, die gemeinsam mit ihren Aufnahmebereichen einen gemeinsamen, seitlich auskragenden Aufnahmebereich für die Objekte bilden.

Derartige Mover-Paare sind folglich als eine Art "Tandem" wirksam, um gemeinsam einen Aufnahmebereich für Objekte bereitzustellen.

Es hat sich gezeigt, dass ein solches Transportprinzip besonders effizient bei Transportmovern mit seitlich auskragendem Aufnahmebereich anwendbar ist. Ein gemeinsamer, seitlich auskragender Aufnahmebereich kann dabei entweder nur an einer Seite des Mover-Tandems vorgesehen sein, wobei alternativ die Träger auch zu beiden Seiten auskragen können.

Die beiden Transportmover können gemäß einer Ausführungsform zur Abgabe von Objekten derart relativ zueinander bewegbar sein, dass die Aufnahmebereiche unter den Objekten weg bewegbar sind. Die Relativbewegung erfolgt bevorzugt derart schnell, dass unter Ausnutzung des Trägheitsprinzips den Objekten gewissermaßen "der Boden unter den Füßen weggezogen" wird. Beispielsweise kann einfach durch Auseinanderbewegen der beiden Mover zwischen den zuvor den gemeinsamen Aufnahmebereich bildenden Einzel-Aufnahmebereichen ein Zwischenraum entstehen. In Abhängigkeit von den Eigenschaften der Objekte können diese beim Auseinanderbewegen der Mover im Wesentlichen ohne seitlichen Versatz nach unten fallen, wenn die Aufnahmebereiche ausreichend schnell unter den Objekten weg bewegt wereden.

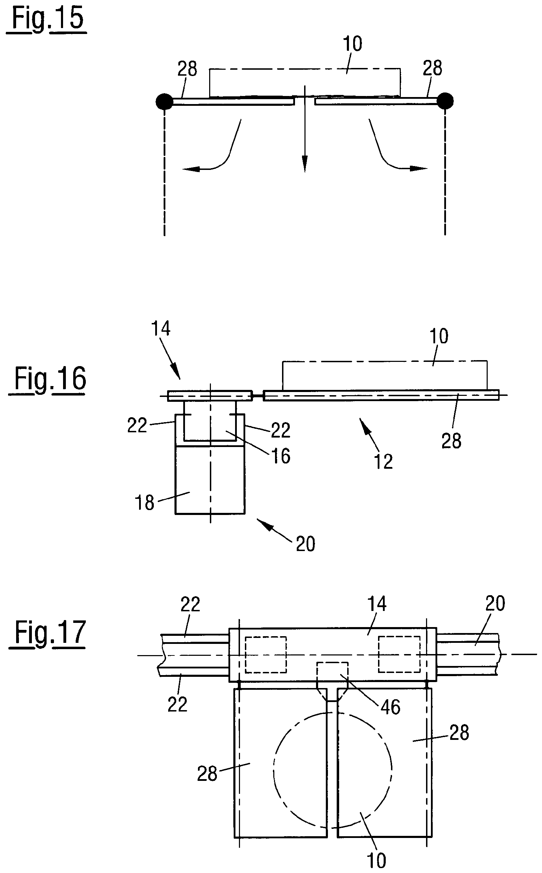

Alternativ oder zusätzlich kann auch eine "Fallklappen"-Anordnung vorgesehen sein, wie sie prinzipiell in Verbindung mit den Fig. 15 bis 17 beschrieben ist. Der Klappvorgang kann beispielsweise durch Auseinanderbewegen der beiden Mover ausgelöst werden. Eine von der Bewegung der Mover unabhängige Auslösevorrichtung für den Klappvorgang ist alternativ möglich.

Gemäß einer weiteren Ausgestaltung der Erfindung kann zumindest einer der Aufnahmebereiche der beiden Transportmover relativ zu einer mit den Objekten bei der Abgabe zusammenwirkenden Abgabehilfe bewegbar sein. Die Abgabehilfe kann z.B. als Abstreifer, als Abräumer, als Ablöser und/oder als Lagefixierer ausgebildet sein.

Insbesondere ist vorgesehen, dass die Abgabehilfe an dem anderen Transportmover angebracht und/oder gemeinsam mit dem anderen Transportmover bewegbar ist. Derartige Abgabehilfen können verhindern, dass sich die Objekte ungewollt mit dem betreffenden Mover von einer gewünschten Abgabeposition weg bewegen, wenn die beiden Mover auseinanderbewegt werden.

Gemäß einer weiteren Ausführungsform sind die beiden Transportmover durch eine längenveränderliche Koppeleinrichtung miteinander gekoppelt. Durch eine derartige Koppeleinrichtung kann insbesondere eine größere Bewegungsstabilität erreicht werden, was einen geringeren Einfluss auf die gleichzeitig von zwei Transportmovern transportierten Objekte bedeutet, die anderenfalls durch Relativbewegungen zwischen den beiden Transportmovern gestört würden.

Die Koppeleinrichtung kann beispielsweise ein oder mehrere teleskopierbare Koppelelemente umfassen. Bevorzugt ist die Koppeleinrichtung an beiden Transportmovern jeweils an zumindest einer Stelle drehbar oder schwenkbar gelagert.

Im Transportbetrieb können die beiden Transportmover derart gesteuert und in dem Bahnsystem bewegt werden, dass sich der Abstand der beiden Aufnahmebereiche nicht verändert. Dabei können sich die von den Aufnahmebereichen gebildeten "Teilträger" mit einem geringen Abstand gegenüberliegen. Die Teilträger können sich alternativ aber auch überlappen oder berühren.

Nach einem weiteren Aspekt der Erfindung ist eine Stabilisierungsvorrichtung vorgesehen, welche eine Bewegbarkeit des Trägers relativ zum Läufer zumindest vorübergehend einschränkt.

Erfindungsgemäß wird insbesondere ein Spiel bzw. ein Wackeln des Trägers verhindert oder zumindest minimiert. Ein gewisses Spiel zwischen dem Träger und dem Läufer kann grundsätzlich wünschenswert sein, um eine möglichst gute Bewegung der Transportmover auf dem Bahnsystem zu gewährleisten. Insbesondere können dadurch Ungleichmäßigkeiten in der Führung für den Träger ausgeglichen werden.

Vorzugsweise kann die Kraftaufnahme möglichst vollständig über die Stabilisierungsvorrichtung erreicht werden. Erfindungsgemäß wird somit zumindest in bestimmten Bereichen der Bahn die Anordnung des Trägers relativ zum Läufer optimiert.

Gemäß einer Ausführungsform ist die Stabilisierungsvorrichtung entlang der gesamten Bahn oder in zumindest einem Teilbereich der Bahn wirksam. So kann die Stabilisierungsvorrichtung insbesondere in kritischen Bereichen wirksam sein, z.B. in Übergabebereichen, in denen die Objekte beispielsweise an eine Verpackungsvorrichtung abgegeben werden. Hier können insbesondere im Lebensmittelbereich beispielsweise Greifer, insbesondere Picker, eines Roboters Portionen vom Träger abnehmen. Dabei ist es für eine positionsgenaue Aufnahme und spätere Ablage der Portionen hilfreich, wenn sich der Träger nicht relativ zum Läufer bewegt. Auch in Kurvenbereichen kann eine Stabilisierung vorteilhaft sein. In Kurvenbereichen kann sich der Träger insbesondere auch schräg stellen, so dass die Objekte in der Bahn gehalten werden und nicht durch Zentrifugalkräfte aus der Bahn geworfen werden.

Vorzugsweise kann die Stabilisierungsvorrichtung auf beiden Seiten oder aber nur auf einer Seite der Bahn auf den Träger wirken.

Nach einer weiteren Ausführungsform ist die Stabilisierungsvorrichtung an der Bahn angeordnet. Vorzugsweise korrespondiert die Stabilisierungsvorrichtung mit zumindest einem Transportmover. Die Stabilisierungsvorrichtung ist insbesondere kein Bestandteil des Transportmovers. Vorzugsweise kann die Stabilisierungsvorrichtung in die Führung für die Transportmover integriert sein. So kann die Führung z.B. lokal etwas gespreizt werden.

Insbesondere wirkt die Stabilisierungsvorrichtung generell auf alle, insbesondere vorbeifahrenden, Transportmover oder betriebszustandsabhängig bzw. produktabhängig lediglich auf eine Auswahl an Transportmovern. So können insbesondere nur bestimmte Transportmover stabilisiert werden.

Gemäß einer weiteren Ausführungsform umfasst die Stabilisierungsvorrichtung zumindest ein Stützelement, insbesondere ein Auflageelement, für den Träger, wobei insbesondere das Stützelement mit einer Unterseite des Trägers in Eingriff bringbar ist. Auf diese Weise kann der Träger beispielsweise auf dem Stützelement aufliegen. Insbesondere kann das Stützelement An- bzw. Auflauf-Schrägen umfassen. Im Bereich des Stützelements kann eine Erfassungseinrichtung den Träger ergreifen bzw. in diesen eingreifen. Auf diese Weise kann auch eine Synchronisation, z.B. mit einem Greifer eines Roboters, insbesondere eines Pickers, erfolgen. Der Roboter kann hierbei gegebenenfalls auch als Schlepphilfe für den Transportmover dienen. Hierbei wird der Antrieb des Transportmovers zumindest teilweise von dem auf den Transportmover eingreifenden Roboter übernommen. Das Stützelement kann insbesondere Greifer-Kräfte, welche auch über das jeweilige Objekt, z.B. eine Lebensmittelportion, auf den Träger übertragen werden können, vertikal und/oder horizontal aufnehmen. Das Stützelement kann sich hierbei insbesondere nahe am Träger befinden, so dass es bereits bei einer geringen Krafteinleitung von oben her zu einem Kontakt, also praktisch zu einem Aufsetzen oder Anliegen, kommt. Vorzugsweise wird die Stabilisierungsvorrichtung derart gewählt, dass möglichst ein Spalt zwischen der Unterseite des Transportmovers und dem Stator des Bahnsystems erhalten bleibt, d.h. der Transportmover setzt insbesondere nicht vollständig auf dem Stator auf.

Erfindungsgemäß ist der Träger und/oder Transportmover mittels der Stabilisierungsvorrichtung anhebbar. Insbesondere kann der Träger hierbei gewissermaßen auf eine Soll-Höhe "aufgebockt" werden, so dass der Träger dann in diesem Teilbereich vorzugsweise einen Bezug zu einem zugeordneten Greifer bzw. Abgabeband und nicht zum Stator haben kann. Der Träger wird also vorzugsweise angehoben. Dieses Anheben wird beispielsweise durch eine vertikale Gleitbewegung in einer entsprechend gestalteten Führung im Transportmover ermöglicht.

Der für den ordnungsgemäßen Antrieb einzuhaltende Spalt zwischen der Unterseite des Transportmovers bzw. des Läufers und der Bahn kann hierbei erhalten bleiben. Insbesondere kann auch der Transportmover zusammen mit dem Träger etwas angehoben und von unten her gegen die Stabilisierungsvorrichtung und/oder Führung gedrückt werden. Dadurch kann sich der Spalt etwas vergrößern, was zu einer zeitweisen Blockade der Transportmover auf der Bahn führen kann.

Gemäß einer weiteren Ausführungsform ist die Stabilisierungsvorrichtung ganz oder teilweise am Träger angeordnet. Der Träger kann hierbei beispielsweise integrierte Rollen, vorzugsweise mit verschiedenen Härtegraden, Gleitbereiche und/oder Magnete umfassen. Es kann bei dieser Ausführungsvariante auf ein herkömmliches Bahnsystem zurückgegriffen werden. Die Bahn selbst muss folglich nicht modifiziert werden. So können beispielsweise Transportmover, welche eine Stabilisierungsvorrichtung aufweisen, an herkömmlichen Bahnsystemen eingesetzt werden.

Auch kann der Träger in Kantenbereichen oder an der Unterseite speziell ausgebildete Gleit- und/oder Unterstützungszonen aufweisen, z.B. für eine zumindest vorübergehende Vertikal- und/oder Seitenführung. Insbesondere kann ein Kantenbereich hierbei abgeschrägt ausgebildet sein, damit der Träger von der Seite her abgestützt werden kann.

Nach einer weiteren Ausführungsform ist die Stabilisierungsvorrichtung aktiv oder passiv ausgebildet. Insbesondere kann die Stabilisierungsvorrichtung, vorzugsweise von außen kommend, nur an einem Teilbereich der Bahn, insbesondere an einem Übergabebereich, zum Träger bewegt werden. Der Träger kann dabei gewissermaßen eingeklemmt werden. Insbesondere kann dabei eine Unterstützung von unten und/oder von der Seite her erfolgen.

Gemäß einer weiteren Ausführungsform ist die Stabilisierungsvorrichtung dazu ausgebildet, den Träger aktiv zu fördern. Die Stabilisierungsvorrichtung kann hierbei Bänder, Ketten, Rollen und/oder Kugeln umfassen. Eine aktive Förderung kann auch beispielsweise mit Hilfe eines Greifers eines Roboters erfolgen. Ferner kann die Stabilisierungsvorrichtung ein Förderband umfassen. Insbesondere können an der Bahn mehrere Rollen, vorzugsweise mit verschiedenen Härtegraden, vorgesehen sein. Die Härte der Rollen kann insbesondere zum Zentrum hin zunehmen.

Insbesondere können sowohl die Greif-Kräfte aufgenommen als auch die Bewegungen der Transportmover unterstützt werden.

Auch können Rollen des Trägers angetrieben sein. Diese aktiven Antriebe der Stabilisierungsvorrichtung können alternativ oder zusätzlich zum eigentlichen Antrieb des Bahnsystems wirksam sein. Insbesondere kann der Antrieb durch die Stabilisierungsvorrichtung nur an einem Teilbereich der Bahn vorgesehen sein. Auch kann der Antrieb durch die Stabilisierungsvorrichtung mit einer anderen als der durch den eigentlichen Antrieb des Bahnsystems vorgegebenen Geschwindigkeit erfolgen, z.B. mit Hilfe der Greifer- oder Übergabeeinrichtungsbewegung.

Gemäß einem nicht zur Erfindung gehörendem Beispiel ist der Träger relativ zum Läufer zumindest vorübergehend drehbar gelagert. Der Träger kann sich beispielsweise in einem beliebigen Maß drehen. Alternativ kann die Drehung auch auf 90° oder 180° begrenzt sein. Vorzugsweise kann der Träger zwischen zwei 90°-Positionen verdreht werden. Insbesondere können Raster, Schlitze und/oder eine Verzahnung vorgesehen sein. Der Träger kann beispielsweise verrasten, so dass der Träger am Läufer fixiert sein kann und somit nur vorübergehend drehbar ist.

Falls der Träger seitlich auskragt, kann der Träger insbesondere derart verdreht werden, dass die Auskragung parallel zur Bahn orientiert ist. Eine seitliche Auskragung ist in dieser Stellung somit nicht mehr gegeben. Der Träger bzw. darauf befindliche Objekte können folglich sicher auf der Bahn geführt werden. Insbesondere wird das Ablagebild der, z.B. gefalteten, Portionen somit nicht beim Passieren bestimmter Bereiche, insbesondere Kurvenbereichen, der Bahn gestört.

Gemäß einem nicht zur Erfindung gehörenden Beispiel ist der Träger an einer vorgegebenen Position oder in einem vorgegebenen Bereich des Bahnsystems, insbesondere in einem Kurvenbereich des Bahnsystems, drehbar. Der Träger wird vorzugsweise zum Durchfahren einer Kurve, beispielsweise einer 180°-Kurve, relativ zum Läufer verdreht, und zwar insbesondere derart, dass sich die Orientierung oder Ausrichtung des Trägers im Raum nicht verändert. Dadurch können Kurven gleichmäßig durchfahren werden, und zwar insbesondere deshalb, da hierdurch auf die Objekte dieselben Fliehkräfte wie in der Bahnmitte wirken, wenn der Träger nachgeführt wird. Bei einem Doppelträger, d.h. einem Träger mit zwei seitlichen Auskragungen, kann sich bei einer 180°-Kurve die Lage der Objekte ändern, d.h. Objekte, die vor der Kurve innen angeordnet waren, sind anschließend außen angeordnet, und umgekehrt.

Die quasi-parallele Fahrweise der Träger in Kurvenbereichen ist auch bei der Übergabe, also der Aufnahme und der Abgabe, von Objekten hilfreich. In Kurvenbereichen kann der Träger präzise positioniert werden, wobei der Bahnverlauf bzw. Bahnaufbau insbesondere kompakt bleiben kann.

Insbesondere kann dem Träger eine Positionierung, Positionssteuerung und/oder Führung zugeordnet sein, vorzugsweise in Kurvenbereichen des Bahnsystems.

Diese Positionierung, Positionssteuerung und/oder Führung kann nahe der Träger-Drehachse am Transportmover vorgesehen sein, insbesondere nach Art eines Drehlagers.

Vorzugsweise kann eine Eingreifvorrichtung, insbesondere ein Zahnprofil oder eine Zahnstange, vorgesehen sein, welche insbesondere an einem Randbereich der Bahn angeordnet ist. Die Eingreifvorrichtung kann dazu ausgebildet sein, an einem Bereich einer Aufnahme für den Träger am Transportmover anzugreifen und den Träger zu drehen. Bei Fahrten außerhalb von Kurvenbereichen kann der Träger einrasten bzw. fixiert sein. Aus dieser Lagerung kann der Träger z.B. in Kurvenbereichen etwas angehoben und gedreht werden. Nach dem Durchfahren der Kurve kann sich der Träger insbesondere wieder absenken und erneut einrasten.

Gemäß einem nicht zur Erfindung gehörenden Beispiel ist der Träger automatisch, insbesondere mittels eines externen oder internen Mechanismus, drehbar. Insbesondere die Betätigung des Rastmechanismus kann mittels äußerer oder innerer Einflüsse erfolgen. Auch kann ein Servomotor am Transportmover vorgesehen sein, welcher den Träger in Abhängigkeit von der aktuellen Position in der Bahn drehen kann. So kann der Träger z.B. entsprechend einem Kurvenverlauf oder auch frei in einem sonstigen Bahnbereich, z.B. um 180°, gedreht werden.

Insbesondere kann, zumindest in Teilbereichen der Bahn oder des Bahnsystems, eine Führung für den Träger vorgesehen sein. Dies ist jedoch nicht zwingend, d.h. auf eine Führung für den Träger kann auch verzichtet werden, so dass sich der Bedarf an zusätzlichen Anbauteilen reduziert.

Generell wird folglich durch die Erfindung die Anordnung des Trägers relativ zum Läufer verbessert.

Gemäß einem weiteren Ausführungsbeispiel ist bei wenigstens einem Transportmover zwischen dem Träger und dem Läufer wenigstens eine zumindest bereichsweise elastisch verformbare Lagerung vorgesehen ist, wobei bevorzugt die Lagerung als Skateboardachse ausgebildet ist.

Skateboardachsen, die im Englischen auch als "trucks" bezeichnet werden, sind grundsätzlich bekannt. In Anwendung dieses Prinzips kann bei der Erfindung erreicht werden, dass sich der Träger relativ zu dem Läufer bewegen kann, so wie sich bei einem Skateboard das im Englischen auch als "deck" bezeichnete Brett relativ zu den Rollen bewegen kann. Dies kann für bestimmte Anwendungen vorteilhaft sein.

Insbesondere ist vorgesehen, dass der Träger an wenigstens zwei Läufern jeweils über eine elastisch verformbare Lagerung angebracht ist. Beispielsweise bei einer Kurvenfahrt eines solchen mit wenigstens zwei Läufern versehenen Transportmovers resultiert aus den Verstellbewegungen bzw. Verschränkungen der elastischen Lagerungen eine Schrägstellung des Trägers relativ zu den Läufern und somit relativ zu dem Bahnsystem. Dies kann z.B. dazu genutzt werden, bei Kurvenfahrten für eine automatische Neigung des Trägers zu sorgen, so dass höhere Kurvengeschwindigkeiten erzielt bzw. die Transportsicherheit für die Objekte erhöht werden kann.

Alle hier beschriebenen Ausführungsformen der Vorrichtungen können jeweils miteinander kombiniert werden.

Die Erfindung wird im Folgenden beispielhaft unter Bezugnahme auf die Zeichnungen beschrieben. Es zeigen:
- Fig. 1 bis Fig. 4: Schnittansichten verschiedener Ausführungsformen einer erfindungsgemäßen Bewegungsvorrichtung,
- Fig. 5: eine Draufsicht einer Ausführungsform einer erfindungsgemäßen Bewegungsvorrichtung,
- Fig. 6: eine Vorderansicht einer Ausführungsform einer erfindungsgemäßen Bewegungsvorrichtung,
- Fig. 7: eine Draufsicht einer Ausführungsform einer erfindungsgemäßen Bewegungsvorrichtung,
- Fig. 8 bis Fig. 10: Schnittansichten verschiedener Ausführungsformen einer erfindungsgemäßen Bewegungsvorrichtung,
- Fig. 11 bis Fig. 14: Draufsichten verschiedener Ausführungsformen einer erfindungsgemäßen Bewegungsvorrichtung,
- Fig. 15 und Fig. 16: Schnittansichten verschiedener Ausführungsformen einer erfindungsgemäßen Bewegungsvorrichtung,
- Fig. 17: eine Draufsicht einer Ausführungsform einer erfindungsgemäßen Bewegungsvorrichtung,
- Fig. 18 bis Fig. 20: Schnittansichten verschiedener Ausführungsformen einer erfindungsgemäßen Bewegungsvorrichtung, und
- Fig. 21: eine Draufsicht eines nicht zur Erfindung gehörenden Beispiels und
- Fig. 22 und 23: Draufsichten auf zwei weitere Ausführungsformen der Erfindung, die jeweils einen "Tandem-Mover" betreffen.

Zunächst ist festzuhalten, dass die dargestellten Ausführungsformen rein beispielhafter Natur sind. Insbesondere können beliebige Objekte transportiert werden. Die Merkmale einer Ausführungsform können auch beliebig mit Merkmalen einer anderen Ausführungsform kombiniert werden.

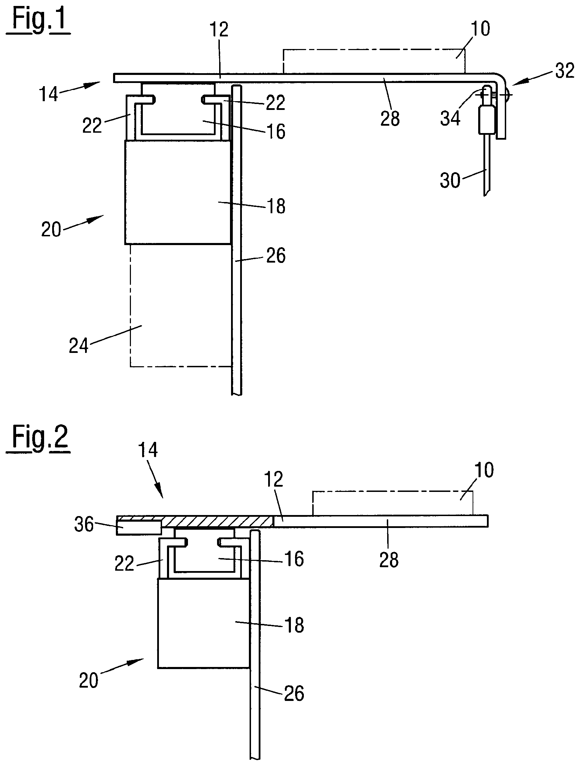

In Fig. 1 ist eine Vorrichtung zum Bewegen von Objekten 10 gezeigt. Bei den Objekten kann es sich beispielsweise jeweils um eine eine oder mehrere einzelne Scheiben umfassende Portion eines Lebensmittelprodukts, beispielsweise Wurst, Käse, Schinken, Fleisch oder dergleichen, handeln. Grundsätzlich ist die Erfindung aber auch außerhalb des Lebensmittelbereiches einsetzbar.

Im Rahmen der Erfindung ist der Begriff "Portion" breit zu verstehen. Eine Portion kann dementsprechend aus nur einer einzigen Scheibe bestehen. Alternativ kann eine Portion mehrere Scheiben umfassen, die in einer grundsätzlich beliebigen Relativanordnung vorliegen können, beispielsweise in einer sogenannten Stapel- oder Schindelanordnung, wie sie auf dem hier in Rede stehenden technischen Gebiet dem Fachmann bekannt sind. Bei der Portion kann es sich um eine Gesamtportion handeln, wie sie abschließend verpackt und im Handel angeboten wird. Alternativ kann die Portion eine Teilportion sein, die erst zusammen mit einer oder mehreren weiteren Teilportionen, die wiederum jeweils eine oder mehrere Scheiben umfassen können, eine Gesamtportion bildet. Die Teilportionen einer Gesamtportion können aus unterschiedlichen Produktsorten gebildet sein, so dass durch Zusammenstellen mehrerer Teilportionen eine Mehrsorten-Portion erzeugt werden kann und nach deren Verpackung somit eine Mehrsorten-Packung vorliegt. Bei den Scheiben kann es sich beispielsweise um vergleichsweise dünne Scheiben handeln, wie sie in Form von Wurst- oder Käseaufschnitt allgemein bekannt sind. Alternativ kann es sich bei den Scheiben jeweils um im Vergleich zu Aufschnitt relativ dicke Stücke wie beispielsweise Frischfleischstücke handeln.

Mit anderen Worten handelt es sich im Rahmen der Erfindung bei einer Portion um die im Hinblick auf die Transportaufgabe kleinste Einheit, die einerseits über eine bestimmte Strecke transportiert werden muss und die gegebenenfalls - je nach Anwendung - andererseits zusätzlich zu weiteren Portionen in Beziehung gesetzt werden muss, um die jeweiligen Anforderungen der Gesamtanlage, die eine oder mehrere Aufschneidevorrichtungen, insbesondere Slicer, das Bahnsystem sowie eine oder mehrere Verpackungsvorrichtungen umfasst, zu erfüllen, und zwar beispielsweise hinsichtlich der Bildung von Formaten, wie sie für die jeweils vorgesehene Verpackungsvorrichtung bereitgestellt werden müssen.

Grundsätzlich kann es sich bei dem Objekt 10 auch um Brot, Schokolade oder andere Lebensmittel handeln. Auch Pakete, Verpackungen, Werkzeuge, Bauteile, Einzelteile oder fertiggestellte Produkte können transportiert werden.

Das Objekt 10 ist auf einem Träger 12 eines Transportmovers 14, welcher einen Läufer 16 umfasst, angeordnet.

Der Transportmover 14 kann ein oder mehrere Objekte 10 transportieren. Alternativ ist es auch möglich, dass mehrere, insbesondere zwei, Transportmover 14 gemeinsam ein Objekt 10 transportieren. Die Transportmover 14 können dabei gemeinsam auf einem Bahnsystem 20 als Einheit in koordinierter Weise bewegt werden. Auf diese Weise können auch größere Lasten, insbesondere schwerere und/oder flächenmäßig größere Objekte 10, auf dem Bahnsystem 20 bewegt werden, als mit nur einem Transportmover 14. Insbesondere können zwei Transportmover 14 unter einem auskragenden Träger 12 vorgesehen sein, um eine ausreichende Parallelität zum Bahnsystem 20 sicherzustellen.

Der Läufer 16 wirkt mit einem Stator 18 nach Art eines Linearmotors zusammen. Der Stator 18 ist Teil des Bahnsystems 20, auf welchem sich die Transportmover 14 bewegen können. Zur Führung der Transportmover 14 ist eine Führung 22 vorgesehen. Die Führung 22 ist Teil des Bahnsystems 20 und kann beispielsweise als ein Paar von Schienen ausgebildet sein. Das Bahnsystem 20 umfasst ferner eine Elektrotechnikeinheit 24, in welcher weitere Elektronikbauteile wie z.B. Stecker und/oder Leitungen verstaut sein können. Das Bahnsystem 20, insbesondere die Elektronikbauteile, ist mittels einer Abdeckung 26 vor Verschmutzungen geschützt und vom Arbeitsbereich abgetrennt.

Zur räumlichen Trennung zwischen dem Bereich für die Elektronik und dem Arbeitsbereich weist der Träger einen Aufnahmebereich 28 auf. Der Aufnahmebereich 28 kragt seitlich aus und bietet eine Aufnahmefläche für das Objekt 10.

Um den Träger 12 seitlich abzustützen, ist eine Führung 30 für den Träger 12 vorgesehen. Die Führung 30 kann auf ein Grundgestell gestützt oder seitlich über Stege an der Abdeckung 26 angeordnet sein. Die Abdeckung 26 kann wiederum selbst auch Teil eines Grundgestells für das Bahnsystem 20 sein.

An der Kontaktstelle zwischen der Führung 30 und dem Träger 12 kann der Träger 12 eine Haltevorrichtung 32 aufweisen. Bei der Haltevorrichtung 32 kann es sich beispielsweise um einen Gleitabschnitt mit einem reibungsvermindernden Material handeln. Auch ist es möglich, dass die Haltevorrichtung 32, wie dargestellt, ein Rollmittel 34 umfasst, welches sich auf der Führung 30 bewegen kann.

Erfindungsgemäß werden Objekte 10 lediglich auf den Aufnahmebereich 28 des Trägers 12 geladen und auf diesem transportiert. Der Bereich oberhalb des Läufers 16 bzw. des Stators 18 bleibt dabei frei von Objekten 10. Es findet somit eine räumliche Trennung zwischen einem verschmutzungsempfindlichen elektrotechnischen Bereich bzw. dem Bahnsystem 20 einerseits und einem Arbeitsbereich andererseits statt. Um die Übertragung von Verschmutzungen zwischen den Bereichen zu vermeiden, ist die Abdeckung 26 vorgesehen. Diese trennt den elektrotechnischen Bereich vom Arbeitsbereich ab. Die Führung 30 stützt hierbei den auskragenden Aufnahmebereich 28 ab und stabilisiert insgesamt die Bewegung des Transportmovers 14 auf dem Bahnsystem 20.

Bei der Ausführungsform, welche in Fig. 2 dargestellt ist, ist ein Gegengewicht 36 vorgesehen. Das Gegengewicht 36 kann die Gewichtskraft, welche durch den Aufnahmebereich 28 und das darauf befindliche Objekt 10 entsteht, kompensieren. Der Schwerpunkt des Trägers 12 befindet sich auf diese Weise wieder im Wesentlichen oberhalb des Läufers 16 bzw. des Stators 18.

Der Träger 12, insbesondere der Aufnahmebereich 28, kann als durchgehende, ebene Fläche ausgebildet sein. Es ist jedoch vorteilhaft, wenn zumindest der Aufnahmebereich 28 als Gitter oder Rechen ausgebildet ist. Dabei kann nämlich beispielsweise ein Greifer, welcher ebenfalls ein Gitter oder einen Rechen umfassen kann, in den Aufnahmebereich 28 von unten her eingreifen und dadurch Objekte 10 vom Träger 12 abnehmen. Alternativ kann der Träger 12 auch insbesondere ein Förderband umfassen, von welchem Objekte, insbesondere Portionen, direkt z.B. in eine Verpackungsvorrichtung abgegeben werden können.

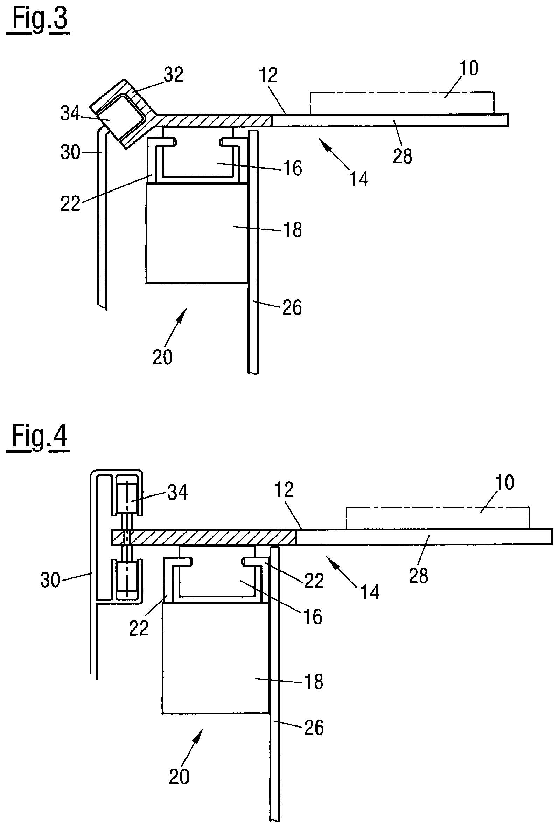

Bei der in Fig. 3 dargestellten Ausführungsform ist die Haltevorrichtung 32 des Trägers 12 als Aufnahmegabel ausgebildet. In die Haltevorrichtung 32 greift hierbei ein Rollmittel 34 der Führung 30 ein. Anstatt eines Rollmittels 34 kann auch eine Gleitführung vorgesehen sein. Die Führung 30 kann starr fixiert sein, z.B. an einem Grundgestell. Auch kann die Führung 30 als Teil der seitlichen Abdeckung 26 ausgebildet sein. Dadurch, dass die Führung 30 auf einem dem Aufnahmebereich 28 abgewandten Endbereich angeordnet ist, können Objekte 10 auf einfache Weise entnommen werden, falls der Aufnahmebereich 28 des Trägers 12 rechenartig ausgebildet ist. Die Führung 30 steht hierbei bei der Abnahme der Objekte 10 nicht im Wege.

Selbiges trifft auf die in Fig. 4 dargestellte Ausführungsvariante zu. Auch hierbei ist die Führung 30 an einem dem Aufnahmebereich 28 abgewandten Endbereich angeordnet. Die Führung 30 ist seitlich angeordnet und kann beispielsweise den Träger 12 zwischen Rollmitteln 34 aufnehmen. Anstatt der Rolllagerung 34 kann auch eine Gleitlagerung vorgesehen sein. Als Führung 30 können zwei oder auch nur eine Rolle, Kugel oder Kegel - allgemein also ein oder mehrere Wälzelemente - vorgesehen sein. Die Führung 30 kann starr fixiert sein, z.B. an einem Grundgestell, und beispielsweise einen Teil der seitlichen Abdeckung 26 bilden.

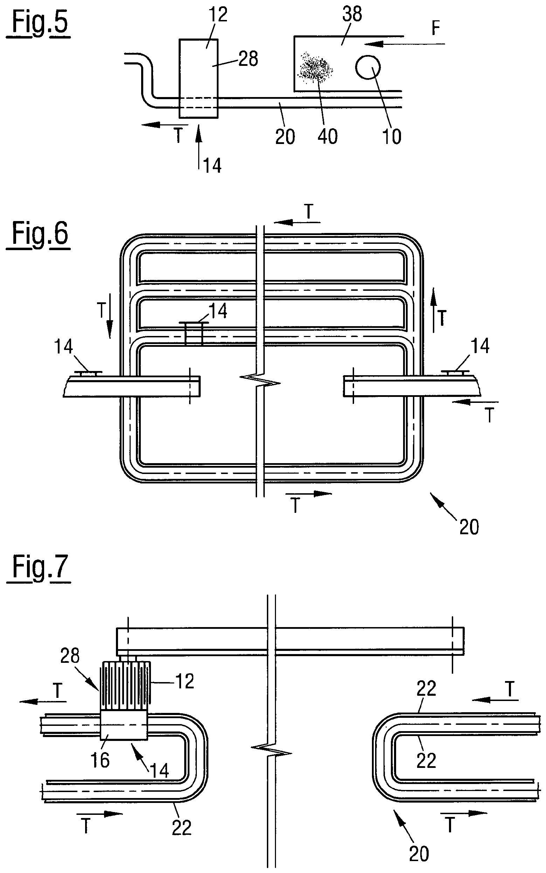

In Fig. 5 ist ein möglicher Verlauf des Bahnsystems 20 dargestellt. Von einem Einleger 38 können Objekte 10 auf die Transportmover 14 übergeben werden. Insbesondere beim Aufschneiden von Lebensmittelprodukten können jedoch auch Produktreste 40 oder fehlerhafte, z.B. untergewichtige, Portionen entstehen. Es soll dabei jedoch vermieden werden, dass diese Produktreste 40 auf das Bahnsystem 20 gelangen und dieses verschmutzen. Aus diesem Grund kann das Bahnsystem 20 seitlich neben dem Bereich des Einlegers 38 vorbeigeführt werden. Produktreste 40 werden somit vom Einleger 38 in Förderrichtung F gefördert und abgeführt, und zwar neben einen Bereich des Bahnsystems 20. Befinden sich hingegen Objekte 10, z.B. Portionen von Lebensmitteln, auf dem Einleger 38, so kann ein Transportmover 14 in Transportrichtung T in den Bereich des Einlegers 38 verfahren werden. Da der Transportmover 14 einen auskragenden Aufnahmebereich 28 aufweist, kann das Objekt 10 an den Träger 12 übergeben werden.

In den Fig. 6 und 7 ist eine Kombination aus horizontalen und vertikalen Bahnsystemen 20 gezeigt. Auf dem horizontalen Bahnsystem 20 beispielsweise von einer Aufschneidevorrichtung kommende Transportmover 14 werden an das vertikale Bahnsystem 20 übergeben. Das vertikale Bahnsystem 20 weist mehrere übereinander angeordnete Spuren auf. Die Transportmover 14 können hierbei insbesondere gepuffert werden. Schließlich können die Transportmover 14 an der linken Seite wieder auf ein horizontales Bahnsystem 20 übergeben werden. Eine Kombination aus horizontalen und vertikalen Bahnsystemen 20 mit jeweils seitlich auskragenden Trägern 12 ist insbesondere vorteilhaft, um unterschiedliche Takte bzw. Arbeitsgeschwindigkeiten einer Aufschneidevorrichtung einerseits und einer Verpackungsmaschine bzw. eines Roboters, z.B. eines so genannten "Pickers", andererseits ausgleichen zu können. Insbesondere im Bereich des vertikalen Bahnsystems 20 kann der elektrotechnische Bereich mit Hilfe der Abdeckung 26 vom auskragenden Aufnahmebereich 28 der Träger 12 getrennt sein.

Wie in Fig. 7 dargestellt ist, können die Objekte 10 beim Übergang zwischen einem horizontalen und einem vertikalen Bahnsystem 20 vom Träger 12, insbesondere vom Aufnahmebereich 28, abgekämmt werden. Es können somit auch lediglich die Objekte 10 und nicht die gesamten Transportmover 14 übergeben werden.

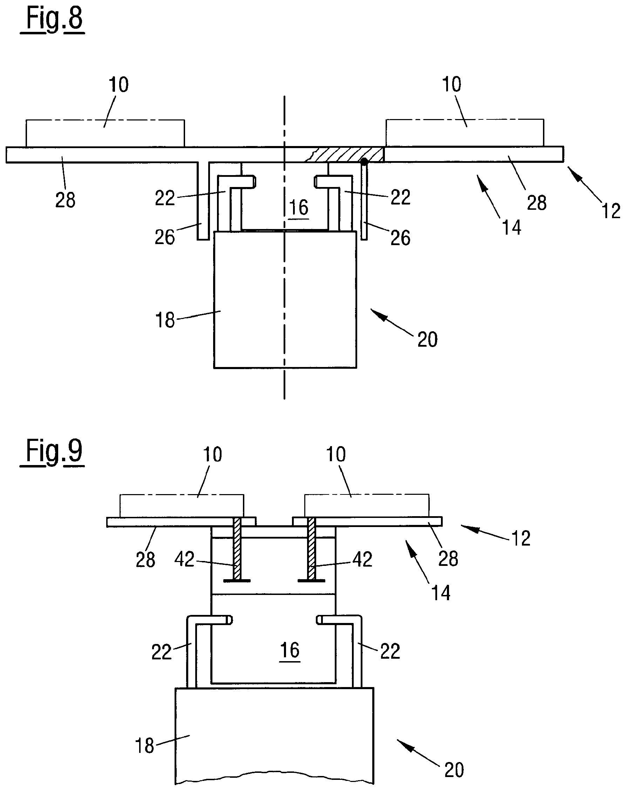

Bei den Ausführungsvarianten, welche in den Fig. 8 bis 17 dargestellt sind, umfasst der Träger 12 zumindest zwei Aufnahmebereiche 28.

Wie in den Fig. 8 und 9 dargestellt ist, sind auf beiden Aufnahmebereichen 28 Objekte 10 angeordnet. Ein Gegengewichtsausgleich ist somit automatisch gegeben. Ein zusätzliches Gegengewicht 36 ist somit nicht erforderlich. Der Arbeitsbereich mit den Objekten 10 ist auch bei dieser Ausführungsform außerhalb des Bahnsystems 20 angeordnet. Beide Aufnahmebereiche 28 können insbesondere jeweils als durchgehende Fläche ausgebildet sein. Auch ist es denkbar, dass zumindest einer der Aufnahmebereiche, vorzugsweise beide Aufnahmebereiche 28, wie in der rechten Variante dargestellt, rechenartig ausgebildet ist bzw. sind. An dem Träger 12 kann auch eine Abdeckung 26 vorgesehen sein, welche das Bahnsystem 20 gegen Verschmutzungen abschirmt. Die Abdeckung 26 kann, wie in der linken Variante gezeigt, beispielsweise starr ausgebildet sein. Dies ist insbesondere bei einem Bahnsystem 20 denkbar, welches als Kreisbahn ausgebildet ist. Alternativ ist es möglich, dass die Abdeckung 26, wie in der rechten Variante gezeigt, flexibel ausgebildet ist, z.B. als Lamelle oder dergleichen. Auch kann die Abdeckung 26 drehbar bzw. gelenkig gelagert sein, um beispielsweise auch Weichen durchfahren zu können. Auch komplex aufgebaute Bahnsysteme 20 mit sich verzweigenden Bahnabschnitten können folglich durchfahren werden.

Der beidseitig auskragende, ausbalancierte Träger 12 ist verhältnismäßig schwer im Vergleich zu den zu transportierenden Objekten 10, d.h. zu der Nutzlast. Es sind daher keine Auswirkungen auf das Fahrverhalten zu erwarten, wenn die Nutzlast auf beiden Seiten sich hinsichtlich des Gewichts unterscheidet bzw. nur eine Seite eine Nutzlast, z.B. Portionen, trägt.

Wie in den Fig. 9 bis 11 dargestellt ist, kann auch eine Höhenverstelleinrichtung 42 für die Aufnahmebereiche 28 vorgesehen sein. Die Aufnahmebereiche 28 können hierbei insbesondere individuell in der Höhe verstellt werden. Dies ermöglicht z.B. ein getrenntes Anheben für ein nacheinander erfolgendes Greifen von Portionen. Auch ermöglicht dies generell die Zugänglichkeit zu den Portionen, beispielsweise auch zum Abstreifen. Ferner kann vermieden werden, dass benachbarte Portionen beschädigt werden. Insbesondere wird ein kompakter Aufbau ermöglicht, welcher nur vergleichsweise geringfügig auskragt.

Der Hub für die Höhenverstelleinrichtung 42 kann durch Einflüsse bzw. eine Kraft von außen erfolgen, vorzugsweise mit Hilfe einer Auflaufschräge oder mittels einer mechanischen, pneumatischen, hydraulischen oder auch magnettechnischen Einrichtung.

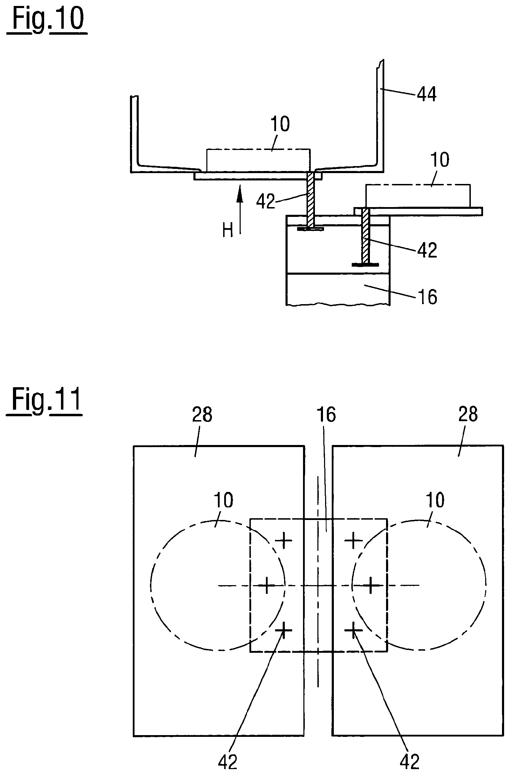

Wie in Fig. 10 dargestellt ist, kann mit Hilfe der Höhenverstelleinrichtung 42 ein Aufnahmebereich 28 des Trägers 12 in Hubrichtung H angehoben werden. Ein Robotergreifer 44 kann in dieser Position das Objekt 10 vom Träger 12 entnehmen.

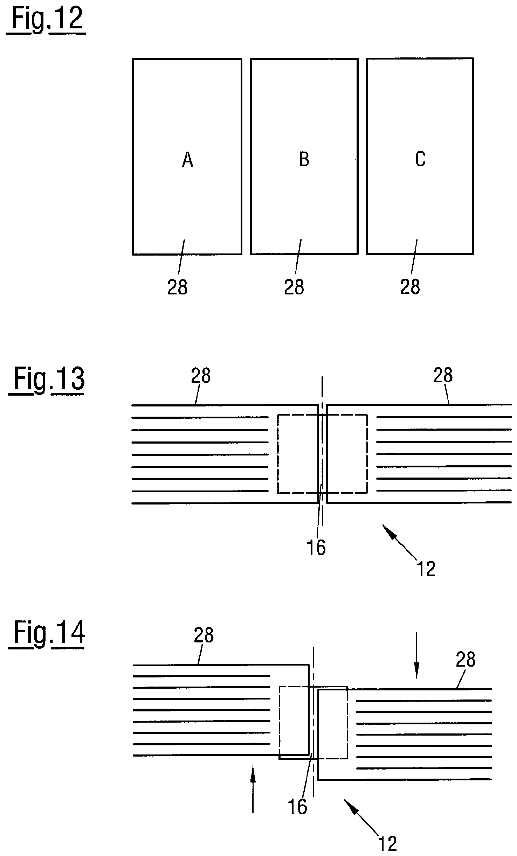

Ist der Träger, wie in Fig. 12 gezeigt, in drei Trägerabschnitte A, B, C unterteilt, so werden zunächst die äußeren Teile A und C angehoben und geleert. Anschließend können die Objekte 10 vom Trägerabschnitt B, der sich in einer nicht angehobenen Tiefposition relativ zu den Trägerabschnitten A und/oder C befindet, gegriffen werden.

In den Fig. 13 und 14 ist ein Doppelträger, d.h. ein Träger 12 mit zwei Aufnahmebereichen 28, dargestellt. Die Aufnahmebereiche 28 sind hierbei rechenartig ausgebildet.

Wie in Fig. 14 dargestellt ist, können die Aufnahmebereiche 28 relativ zueinander von außen her verschoben werden. Auf diese Weise können darauf befindliche Objekte 10 leichter und vor allem individuell auf jeder Seite abgegeben werden.

Die Verschiebung kann durch eine Krafteinwirkung von außen her erfolgen, z.B. mittels eines Fixpunkts am Rand des Bahnsystems 20 als Anschlag für den Träger 12. Der Transportmover 14 kann beispielsweise in eine bestimmte Position des Bahnsystems 20 anhand der Portionsmitte eines Objekts 10 auf einem Aufnahmebereich 28 gebracht werden. Der zweite Aufnahmebereich 28 kann daraufhin entsprechend der Portionsmitte des darauf befindlichen Objekts 10 verschoben werden, um auch für dieses Objekt 10 einen optimalen Übergabepunkt zu erreichen.

Es kann auch eine, beispielsweise federbelastete, Rückstellvorrichtung vorgesehen sein, um die Aufnahmebereiche 28 wieder in eine nicht verschobene Position zurückzuführen.

Die Aufnahmebereiche 28 können auch aufgeklappt werden. Dies ist in den Fig. 15 bis 17 dargestellt. Somit können Objekte 10 nach unten übergeben werden. Dies ist insbesondere für Portionen oder für an Verpackungen, z.B. an so genannte Trays, zu übergebende Portionen vorteilhaft. Hierfür beispielsweise vorgesehene Klappen können insbesondere von außen betätigt werden, z.B. mittels Hebel, Zahnstangen, Bolzen, einer Pneumatik oder dergleichen. Insbesondere können die Klappen wieder in die Normalstellung, d.h. die Transportstellung, zurückgestellt werden. Hierbei kann beispielsweise eine Rückstellfeder vorgesehen sein. In der Normalstellung können die Klappen fixiert sein. Die Lösung dieser Fixierungen kann von außen her erfolgen.

Zum Fixieren der Klappen kann, wie in Fig. 17 dargestellt ist, beispielsweise ein Riegel 46, z.B. nach Art einer Lasche, vorgesehen sein.

Bei einem Ausführungsbeispiel mit zwei gekoppelten Transportmovern 14 kann die Verriegelung der Klappen z.B. durch eine Lasche oder durch Bolzen erfolgen. Diese können beispielsweise von außen betätigt werden. Alternativ können diese auch durch ein Zusammenfahren der Transportmover 14 betätigt werden bzw. kann die Klappenbewegung durch entsprechend koordiniertes Verfahren der Transportmover 14 angesteuert werden. Für das Zusammenfahren bzw. Verfahren der Transportmover 14 ist insbesondere ein Spiel im gemeinsamen Träger 12 in Längsrichtung vorgesehen.

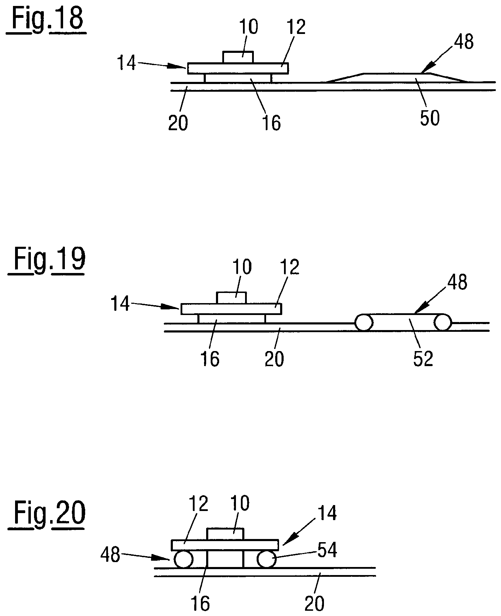

Bei den in den Fig. 18 bis 20 dargestellten Ausführungsformen ist jeweils eine Stabilisierungsvorrichtung 48 vorgesehen. Normalerweise weist der Träger 12 relativ zum Läufer 16 des Transportmovers 14 ein gewisses Spiel auf. Dieses Spiel kann insbesondere zu unerwünschten Bewegungen wie z.B. einem "Wackeln" führen, falls beispielsweise Objekte 10 vom Träger 12 entnommen werden sollen.

In Fig. 18 umfasst die Stabilisierungsvorrichtung 48 eine Rampe 50 als Stützelement. Die Rampe 50 ist auf das Bahnsystem 20 aufgesetzt bzw. bildet einen Teil des Bahnsystems 20. Erreicht der Transportmover 14 den Bereich der Rampe 50, liegt der Träger 12 auf der Rampe 50 auf und kann sich nicht mehr relativ zum Läufer 16 bewegen. Eine derartige Stabilisierung ist insbesondere im Bereich der Übergabe an eine Verpackungsvorrichtung, im Bereich der Portionsaufnahme oder in Kurvenbereichen vorteilhaft.

Während die Stabilisierungsvorrichtung 48 in Fig. 18 statisch ausgebildet ist, kann diese auch, wie in Fig. 19 beispielhaft gezeigt, aktiv ausgebildet sein.

Gemäß Fig. 19 umfasst die Stabilisierungsvorrichtung 48 ein Förderband 52. Auch dieses ist gegenüber dem restlichen Bahnsystem 20 erhöht, so dass der Träger 12 darauf aufliegen kann. Im Bereich der Stabilisierungsvorrichtung 42 kann somit der Transportmover 14, zumindest unterstützend, auch durch das Förderband 52 bewegt werden. Optional wird auch der Transportmover 14 mit der Geschwindikeit des Förderbandes 52 bewegt.

Gemäß der in Fig. 20 gezeigten Ausführungsform muss die Stabilisierungsvorrichtung 48 nicht zwangsläufig mit dem Bahnsystem 20 verbunden sein. So ist es auch möglich, dass die Stabilisierungsvorrichtung 48 am Transportmover 14, insbesondere an der Unterseite des Trägers 12, angeordnet ist. So weist der Träger 12 Rollen 54 auf, welche den Träger 12 auf dem Bahnsystem 20 abstützen können, so dass zwischen dem Träger 12 und dem Läufer 16 des Transportmovers 14 kein Spiel mehr vorhanden ist.

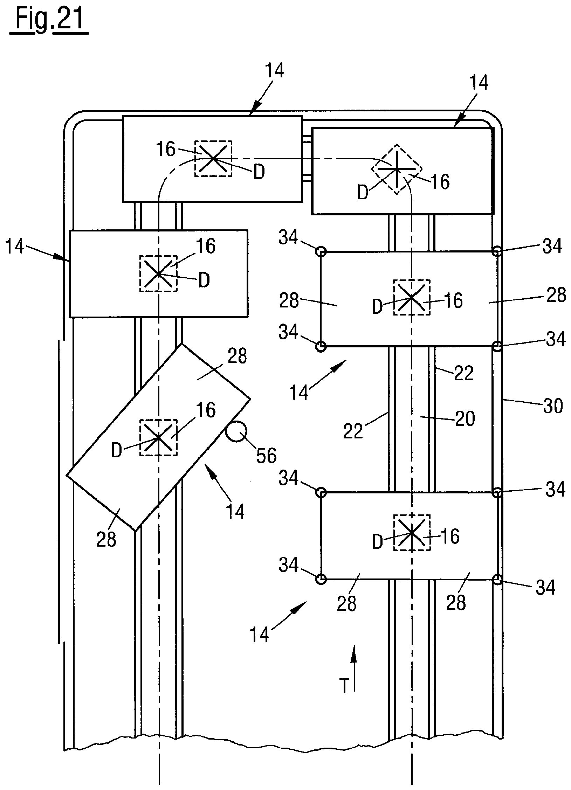

In Fig. 21 ist ein Beispiel mit einem drehbar gelagerten Träger 12 eines Transportmovers 14 dargestellt. Obwohl hier zwei auskragende Aufnahmebereiche 28 dargestellt sind, gelten die folgenden Ausführungen auch entsprechend für einen, z.B. quadratischen, Träger 12 ohne Auskragung.

Der Träger 12 kann um eine Drehachse D relativ zum Läufer 16 verdreht werden. Die Drehachse D verläuft hierbei zentral durch den Transportmover 14, wobei grundsätzlich auch eine asymmetrisch oder exzentrisch angeordnete Drehachse möglich ist.

Der Träger 12 wird von einer Führung 30 für den Träger 12 geführt. Die Führung 30 kann einseitig, beidseitig oder wechselseitig zum Bahnsystem 20 angeordnet sein. Auch kann die Führung 30 nur in Teilbereichen vorgesehen sein oder sogar gänzlich fehlen.

Die Führung 30 bildet eine horizontale Auflage bzw. Abstützfläche für den Träger 12, insbesondere für dessen Randbereich. Die Führung 30 kann insbesondere als Winkel mit einer Auflage für einen Randbereich des Trägers 12 ausgebildet sein.

Ein Verkanten des Trägers 12 wird insbesondere mit Hilfe von vier Rollmitteln 34, z.B. Stützrollen, verhindert, welche an den Eckbereichen des Trägers 12 angeordnet sind. Alternativ kann die Führung 30 eine Gleit- oder Rollenführung umfassen. Auch kann z.B. ein Kunststoffabschnitt des Trägers 12 auf einer metallischen Führung 30 gleiten, welche vorzugsweise als ein an dem Bahnsystem 20 oder an einem Untergestell angebrachtes, separates Profil ausgebildet ist. Insbesondere kann die Führung 30 für den Träger 12 auch ein Bestandteil einer flächigen Bahnabdeckung sein.

Als Führung 30 für den Träger 12 kommt auch eine Kulisse in Betracht, welche zumindest auf Teilstrecken von unten her mit dem Träger 12 korrespondiert, also insbesondere nicht in dessen Randbereich eingreift. Daher kann beispielsweise ein Stift an der Unterseits des Trägers 12 in der Kulisse geführt werden. Wenn die Kulisse einen entsprechenden Bahnverlauf aufweist, dann bewirkt der Stift eine Drehung bzw. Bewegung des Trägers 12. Die Kulisse befindet sich somit im Bereich zwischen dem Rand eines Trägers 12 und dem Rand der Bahn 20.

Zumindest auf Teilstücken der Bahn 20 ist es auch möglich, dass mindestens ein, vorzugsweise mindestens zwei, nach unten gerichteter Stift an dem Träger 12 mit mindestens einer Führung 22 für dem Läufer 16 korrespondiert. Vorzugsweise von der Außenseite her liegt dieser an der Führung 22 an und verhindert ein Verdrehen des Trägers 12. Die Führung 22 für den Läufer 16 bildet hierbei zumindest einen Teil der Führung 30 für den Träger 12.

In den Kurvenbereichen kann eine andere Gestaltung der Führung 30 für den Träger 12 vorgesehen sein, wobei ein entsprechender Stift insbesondere versenkt oder weggeklappt werden kann. Dabei kann der Träger mit anderen Mitteln geführt werden.

Es kann eine Federvorspannung im Drehgelenk für den Träger 12 im Transportmover 14 vorgesehen sein, welche eine bestimmte Orientierung oder Ausrichtung des Trägers 12 vorgibt bzw. sicherstellt. Dadurch kann insbesondere eine zusätzliche Führung 30 für den Träger 12 zumindest teilweise ersetzt werden. Ein entsprechendes Feder- bzw. Arretierungselement kann hierbei insbesondere entriegelbar ausgebildet sein, um z.B. eine Drehung zu vollführen.

Um den Träger 12 auf dem Fahrweg zu drehen, kann an der entsprechenden Stelle die seitliche Führung 30 für den Träger 12 nach außen versetzt oder ausgespart sein. Die Führung 30 kann insbesondere schaltbar verstellt werden. Dies ist auf der linken Seite in Fig. 21 dargestellt. Mindestens eine hier z.B. als Nocke 56 ausgebildete Drehvorrichtung wird in den Fahrbereich bewegt und wirkt mit dem Träger 12 derart zusammen, dass sich der Träger 12 im Vorbeifahren dreht.

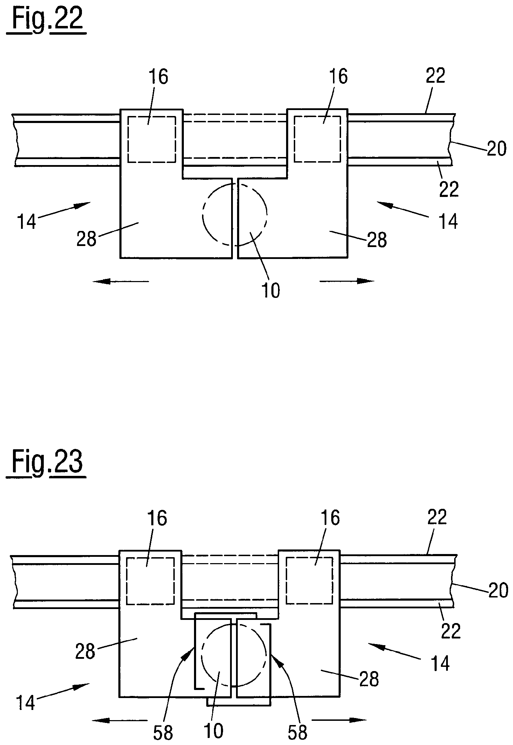

In Fig. 22 sind in dem Bahnsystem 20 zwei einander zugeordnete Transportmover 14 gezeigt, die jeweils einen seitlich auskragenden Aufnahmebereich 28 für zu transportierende Objekte 10 aufweisen. Die diese Aufnahmebereiche 28 bereitstellenden Träger dieser beiden Mover 14 sind in diesem Ausführungsbeispiel jeweils im Wesentlichen L-förmig und zueinander spiegelverkehrt ausgebildet. Auf diese Weise ist im Bereich des die Führungen 22 umfassenden Bahnsystems 20 zwischen den Movern 14 ein freier Raum auch dann vorhanden, wenn die beiden Träger mit ihren auskragenden Aufnahmebereichen 28 entsprechend der Situation in Fig. 22 eine zusammenhängende oder allenfalls von einem kleinen Spalt unterbrochene Gesamt-Auflagefläche für die Objekte 10 bereitstellen.

Um die Objekte 10 - in diesem Ausführungsbeispiel durch Fallenlassen - abzugeben, werden die beiden Mover 14 in entgegengesetzte Richtungen voneinander weg bewegt, wie es durch die beiden Pfeile in Fig. 22 angedeutet ist.

Das in Fig. 23 gezeigte Ausführungsbeispiel entspricht jenem der Fig. 22, wobei zusätzlich jeder Mover 14 mit einer als Abstreifer oder Abräumer ausgebildeten Abgabehilfe 58 versehen ist. Die Abstreifer 58 sind jeweils an dem einen Mover 14 befestigt und erstrecken sich zum Aufnahmebereich 28 des anderen Movers 14 hin, sodass sie beim Auseinanderbewegen der beiden Mover 14 mit den Objekten 10 in einer jeweils gewünschten, u.a. von der Ausgestaltung der Abstreifer 58 abhängigen Art und Weise zusammenwirken können.

Die Abstreifer 58 können jeweils starr sein und mit ihrer Ausladung zumindest im Wesentlichen an den relativen Verfahrweg der beiden Mover 14 angepasst sein. Alternativ oder zusätzlich kann sich der zu einem Aufnahmebereich 28 hin erstreckende Abstreifer 58 mit diesem Aufnahmebereich 28 mitbewegen, wenn die beiden Mover 14 voneinander weg bewegt werden.

Die Abstreifer 58 können elastisch auslenkbar sein, um beim Auseinanderbewegen der Mover 14 nachgeben zu können, z.B. wenn sie in Kontakt mit den Objekten 10 gelangen und die Objekte 10 dann noch teilweise auf der oder den Aufnahmebereichen 28 aufliegen.

Die Ausgestaltung und Anordnung der Abstreifer 58 hängt auch von der Beschaffenheit der jeweiligen Objekte 10 ab, beispielsweise davon, ob es sich um vergleichsweise festes "Stückgut" oder um weiche Objekte handelt. Es ist auch möglich, die Aufnahmebereich 28 jeweils mittels der Abstreifer 58 abzukämmen. Die Abstreifer 58 können grundsätzlich in jeder beliebigen Höhenposition mit den Objekten 10 zusammenwirken.

Auch ist es möglich, beispielsweise klingen- oder drahtartige Abstreifer 58 einzusetzen, die zwischen der Unterseite der Objekte 10 und der Auflagefläche der Aufnahmebereiche 28 hindurchbewegt werden, wenn die Mover 14 auseinanderbewegt werden, um auf diese Weise die Objekte 10 von den Auflageflächen zu trennen oder abzulösen, so dass die Aufnahmebereiche 28 besser unter den Objekten 10 wegbewegt werden könnnen.

Alternativ oder zusätzlich zu mit den Movern 14 mitbewegbaren Abstreifern 58 kann eine in Bewegungsrichtung der Mover 14 relativ zu diesen stationäre Fixiereinrichtung vorgesehen sein, die z.B. einen rahmenartigen Aufbau aufweist und im Bereich der jeweiligen Abgabeposition der Objekte 10 auf ein auf dem gemeinsamen Aufnahmebereich der beiden Mover 14 jeweils aufliegendes Objekt absenkbar ist und dieses Objekt umgreift oder übergreift. Beispielsweise kann hierbei ein Fixierrahmen um das Objekt gelegt werden. Hierdurch wird beim Auseinanderbewegen der Mover 14 das Objekt 10 zumindest in Bewegungsrichtung der Mover 14 selbst dann festgehalten, wenn es an den Aufnahmebereichen 28 der Mover 14 haftet. Auf diese Weise ist sichergestellt, dass durch Fallenlassen abzugebende Objekte 10 an der jeweils vorgegebenen Abgabeposition verbleiben, wenn die Mover 14 zum Erzeugen einer "Abgabeöffnung " auseinanderbewegt werden.

Generell erfolgt das Auseinanderbewegen der Mover 14 vorzugsweise insofern gleichzeitig, als die beiden Mover 14 jeweils mit der gleichen Geschwindigkeit und über die gleiche Wegstrecke in die entgegengesetzten Richtungen bewegt werden.

Durch die Erfindung kann generell somit die Anordnung des Trägers relativ zum Läufer bzw. zum Stator auf einfache Weise verbessert werden.

### Bezugszeichenliste

- 10: Objekt
- 12: Träger
- 14: Transportmover
- 16: Läufer
- 18: Stator
- 20: Bahnsystem
- 22: Führung für Läufer
- 24: Elektrotechnikeinheit
- 26: Abdeckung
- 28: Aufnahmebereich
- 30: Führung für Träger
- 32: Haltevorrichtung
- 34: Rollmittel
- 36: Gegengewicht
- 38: Einleger
- 40: Produktrest
- 42: Höhenverstelleinrichtung
- 44: Robotergreifer
- 46: Riegel
- 48: Stabilisierungsvorrichtung
- 50: Rampe, Stützelement
- 52: Förderband
- 54: Rolle
- 56: Nocke, Drehvorrichtung
- 58: Abgabehilfe, Abstreifer, Ablöser
- F: Förderrichtung
- T: Transportrichtung
- H: Hubrichtung
- A, B, C: Trägerabschnitt
- D: Drehachse

## Patentansprüche

1. Vorrichtung zum Bewegen von Objekten (10),
mit einer Mehrzahl individuell bewegbarer Transportmover (14) zum Transport der Objekte (10),
mit einem Bahnsystem (20) für die Transportmover (14), in welchem die Transportmover (14) entlang wenigstens einer vorgegebenen Bahn in einer Transportrichtung (T) bewegbar sind, und
mit einer Steuereinrichtung zum Steuern der Bewegungen der Transportmover (14) in dem Bahnsystem (20),
wobei die Transportmover (14) jeweils zumindest einen mit dem Bahnsystem (20) zusammenwirkenden Läufer (16) und wenigstens einen am Läufer (16) angebrachten Träger (12) für Objekte (10) umfassen, und
wobei der Träger (12) sich permanent in einer Auskragposition befindet, in welcher der Träger (12) wenigstens mit einem Aufnahmebereich (28) für die Objekte (10) seitlich auskragt,
wobei in der Auskragposition der Aufnahmebereich (28) seitlich versetzt zu einem Stator (18) des Bahnsystems (20), zum Läufer (16) und/oder zu einer Führung (22) für den Läufer (14) angeordnet ist,
wobei zumindest abschnittsweise wenigstens eine Führung (30) für den Träger (12) vorgesehen ist, wobei insbesondere die Führung (30) für den Träger (12) von der Führung (22) für den Läufer (16) verschieden ist,
**dadurch gekennzeichnet, dass** eine Stabilisierungsvorrichtung (48) vorgesehen ist, welche eine Bewegbarkeit des Trägers (12) relativ zum Läufer (16) zumindest vorübergehend einschränkt und der Träger (12) und/oder der Transportmover (14) mittels der Stabilisierungsvorrichtung (48) anhebbar ist.

2. Vorrichtung nach Anspruch 1,
**dadurch gekennzeichnet, dass**
die Führung (30) für den Träger (12) mit einem seitlich auskragenden Bereich des Trägers (12), insbesondere dessen Endbereich, zusammenwirkt.

3. Vorrichtung nach einem der vorhergehenden Ansprüche,
**dadurch gekennzeichnet, dass**
der Träger (12) eine Haltevorrichtung (32) umfasst, welche mit der Führung (30) zusammenwirkt und insbesondere die Führung (30) zumindest teilweise umgreift und/oder auf der Führung (30) aufliegt und/oder anliegt, insbesondere wobei die Haltevorrichtung (32) ein Rollmittel (34) und/oder einen Gleitabschnitt mit einem reibungsvermindernden Material umfasst.

4. Vorrichtung nach einem der vorhergehenden Ansprüche,
**dadurch gekennzeichnet, dass**
der Träger (12), insbesondere automatisch, vorzugsweise bei bewegtem Transportmover (14), vom Läufer (16) abnehmbar ist.

5. Vorrichtung nach Anspruch 4,
**dadurch gekennzeichnet, dass**
der abgenommene Träger (12) zumindest vorübergehend durch einen zusätzlich zum Bahnsystem (20) vorgesehenen Antrieb förderbar ist, wobei insbesondere der zusätzliche Antrieb die Führung auf einem entsprechenden Abschnitt der Bahn (20) übernimmt.

6. Vorrichtung nach einem der vorhergehenden Ansprüche,
**dadurch gekennzeichnet, dass**
der Transportmover (14) mit einem Gegengewicht (36) zum Ausgleichen des Aufnahmebereiches (28) versehen ist, wobei insbesondere das Gegengewicht (36) am Träger (12) oder an einer Halterung oder Traverse für den Träger (12) angebracht ist.

7. Vorrichtung nach Anspruch 6,
**dadurch gekennzeichnet, dass**
das Gegengewicht (36) zur Anpassung an ein auszugleichendes Gewicht veränderbar ist.

8. Vorrichtung nach einem der vorhergehenden Ansprüche,
**dadurch gekennzeichnet, dass**
zumindest ein Paar von zusammenwirkenden Transportmovern (14) vorgesehen ist, die gemeinsam mit ihren Aufnahmebereichen (28) einen gemeinsamen, seitlich auskragenden Aufnahmebereich für die Objekte (10) bilden, insbesondere wobei die beiden Transportmover (14) zur Abgabe von Objekten (10) derart relativ zueinander bewegbar sind, dass die Aufnahmebereiche (28) unter den Objekten (10) weg bewegbar sind.

9. Vorrichtung nach Anspruch 8,
**dadurch gekennzeichnet, dass**
zumindest einer der Aufnahmebereiche (28) der beiden Transportmover (14) relativ zu einer mit den Objekten (10) bei der Abgabe zusammenwirkenden Abgabehilfe (58) bewegbar ist, insbesondere wobei die Abgabehilfe (58) als Abstreifer oder als Fixierer ausgebildet ist.

10. Vorrichtung nach zumindest einem der vorstehenden Ansprüche,
**dadurch gekennzeichnet, dass**
die Stabilisierungsvorrichtung (48) entlang der gesamten Bahn oder in zumindest einem Teilbereich der Bahn wirksam ist.

11. Vorrichtung nach zumindest einem der vorstehenden Ansprüche,
**dadurch gekennzeichnet, dass**
die Stabilisierungsvorrichtung (48) an der Bahn angeordnet ist.

12. Vorrichtung nach zumindest einem der vorstehenden Ansprüche,
**dadurch gekennzeichnet, dass**
die Stabilisierungsvorrichtung (48) zumindest ein Stützelement (50), insbesondere ein Auflageelement, für den Träger umfasst, wobei insbesondere das Stützelement (50) mit einer Unterseite des Trägers (12) in Eingriff bringbar ist.

13. Vorrichtung nach zumindest einem der vorstehenden Ansprüche,
**dadurch gekennzeichnet, dass**
die Stabilisierungsvorrichtung (48) aktiv oder passiv ausgebildet ist.

14. Vorrichtung nach einem der vorhergehenden Ansprüche,
**dadurch gekennzeichnet, dass**
bei wenigstens einem Transportmover (14) zwischen dem Träger (12) und dem Läufer (16) wenigstens eine zumindest bereichsweise elastisch verformbare Lagerung vorgesehen ist, wobei bevorzugt die Lagerung als Skateboardachse ausgebildet ist, insbesondere wobei der Träger (12) an wenigstens zwei Läufern (16) jeweils über eine elastisch verformbare Lagerung angebracht ist.

## Claims

1. An apparatus for moving objects (10),
comprising a plurality of individually movable transport movers (14) for transporting the objects (10);
a path system (20) for the transport movers (14) in which the transport movers (14) are movable in a transport direction (T) along at least one predefined path; and
a control device for controlling the movements of the transport movers (14) in the path system (20),
wherein the transport movers (14) each comprise at least one runner (16) cooperating with the path system (20) and at least one carrier (12) for objects (10) attached to the runner (16);
wherein the carrier (12) is permanently located in a protruding position in which the carrier (12) protrudes laterally at least with a pick-up region (28) for the objects (10);
wherein the pick-up region (28) is arranged in the protruding position laterally offset from a stator (18) of the path system (20), from the runner (16) and/or from a guide (22) for the runner (16); and
wherein at least one guide (30) is at least sectionally provided for the carrier (12), with in particular the guide (30) for the carrier (12) differing from the guide (22) for the runner (16),
**characterized in that** a stabilization apparatus (48) is provided which at least temporarily restricts a movability of the carrier (12) relative to the runner (16); and **in that** the carrier (12) and/or the transport mover (14) can be raised by means of the stabilization apparatus (48).

2. An apparatus in accordance with claim 1,
**characterized in that**
the guide (30) for the carrier (12) cooperates with a laterally protruding region of the carrier (12), in particular its end region.

3. An apparatus in accordance with one of the preceding claims,
**characterized in that**
the carrier (12) comprises a holding apparatus (32) which cooperates with the guide (30) and in particular at least partly engages around the guide (30) and/or lies on and/or contacts the guide (30), in particular with the holding apparatus (32) comprising a rolling means (34) and/or a sliding section having a friction-reducing material.

4. An apparatus in accordance with any one of the preceding claims,
**characterized in that**
the carrier (12) is removable, in particular automatically removable, from the runner (16), preferably with a moving transport mover (14).

5. An apparatus in accordance with claim 4,
**characterized in that**
the removed carrier (12) is at least temporarily conveyable by a drive provided in addition to the path system (20), with in particular the additional drive taking over the guidance on a corresponding section of the path (20).

6. An apparatus in accordance with any one of the preceding claims,
**characterized in that**
the transport mover (14) is provided with a counterweight (36) for balancing the pick-up region (28), with in particular the counterweight (36) being attached to the carrier (12) or to a holder or crossbeam for the carrier (12).

7. An apparatus in accordance with claim 6,
**characterized in that**
the counterweight (36) is variable for adapting to a weight to be balanced.

8. An apparatus in accordance with any one of the preceding claims,
**characterized in that**
at least one pair of cooperating transport movers (14) is provided which form, together with their pick-up regions (28), a common, laterally protruding pick-up region for the objects (10), in particular with the two transport movers (14) being movable relative to one another for the placement of objects (10) such that the pick-up regions (28) are movable away beneath the objects (10).

9. An apparatus in accordance with claim 8,
**characterized in that**
at least one of the pick-up regions (28) of the two transport movers (14) is movable relative to a placement aid (58) cooperating with the objects (10) on the placement, in particular with the placement aid (58) being configured as a scraper or as a fixer.

10. An apparatus in accordance with any one of the preceding claims,
**characterized in that**
the stabilization apparatus (48) is active along the total path or in at least a part region of the path.

11. An apparatus in accordance with any one of the preceding claims,
**characterized in that**
the stabilization apparatus (48) is arranged at the path.

12. An apparatus in accordance with any one of the preceding claims,
**characterized in that**
the stabilization apparatus (48) comprises at least one support element (50), in particular a holding element, for the carrier, with in particular the support element (50) being able to be brought into engagement with a lower side of the carrier (12).

13. An apparatus in accordance with any one of the preceding claims,
**characterized in that**
the stabilization apparatus (48) is active or passive.

14. An apparatus in accordance with any one of the preceding claims,
**characterized in that**,
in at least one transport mover (14), at least one support which is at least regionally elastically deformable is provided between the carrier (12) and the runner (16), with preferably the support being configured as a skateboard axle, in particular with the carrier (12) being attached to at least two runners (16) via an elastically deformable support in each case.

## Revendications

1. Dispositif pour déplacer des objets (10), comportant
une pluralité de chariots de transport (14) mobiles individuellement, destinés à transporter les objets (10),
un système de voie (20) pour les chariots de transport (14), dans lequel les chariots de transport (14) sont mobiles dans une direction de transport (T) le long d'au moins une voie prédéterminée, et
un moyen de commande destiné à commander les mouvements des chariots de transport (14) dans le système de voie (20),
dans lequel
les chariots de transport (14) comprennent chacun au moins un curseur (16) coopérant avec le système de voie (20) et au moins un support (12) destiné à des objets (10) et monté sur le curseur (16), et
le support (12) se trouve en permanence dans une position en porte-à-faux dans laquelle le support (12) est en porte-à-faux latéralement au moins par une zone de réception (28) pour les objets (10),
dans la position en porte-à-faux, la zone de réception (28) est disposée de manière décalée latéralement par rapport à un stator (18) du système de voie (20), par rapport au curseur (16) et/ou par rapport à un guidage (22) pour le curseur (14),
il est prévu au moins localement au moins un guidage (30) destiné au support (12), en particulier, le guidage (30) destiné au support (12) étant différant du guidage (22) destiné au curseur (16),
**caractérisé en ce que**
il est prévu un dispositif de stabilisation (48) qui restreint au moins temporairement une mobilité du support (12) par rapport au curseur (16), et le support (12) et/ou le chariot de transport (14) peut être soulevé au moyen du dispositif de stabilisation (48).

2. Dispositif selon la revendication 1,
**caractérisé en ce que**
le guidage (30) destiné au support (12) coopère avec une zone latéralement en porte-à-faux du support (12), en particulier avec sa zone d'extrémité.

3. Dispositif selon l'une des revendications précédentes,
**caractérisé en ce que**
le support (12) comprend un dispositif de retenue (32) qui coopère avec le guidage (30) et, en particulier, entoure au moins partiellement le guidage (30) et/ou repose et/ou s'appuie sur le guidage (30), en particulier le dispositif de retenue (32) comprenant un moyen de roulement (34) et/ou une portion de coulissement ayant un matériau réducteur de friction.

4. Dispositif selon l'une des revendications précédentes,
**caractérisé en ce que**
le support (12) peut être enlevé du curseur (16), en particulier automatiquement, de préférence lorsque le chariot de transport (14) est en mouvement.

5. Dispositif selon la revendication 4,
**caractérisé en ce que**
le support enlevé (12) peut être transporté, au moins temporairement, par un entraînement prévu en supplément au système de voie (20), en particulier l'entraînement supplémentaire assurant le guidage sur une portion correspondante de la voie (20).

6. Dispositif selon l'une des revendications précédentes,
**caractérisé en ce que**
le chariot de transport (14) est pourvu d'un contrepoids (36) destiné à équilibrer la zone de réception (28), en particulier le contrepoids (36) étant fixé au support (12) ou à un élément de maintien ou à une traverse pour le support (12).

7. Dispositif selon la revendication 6,
**caractérisé en ce que**
le contrepoids (36) est variable pour l'adaptation à un poids à équilibrer.

8. Dispositif selon l'une des revendications précédentes,
**caractérisé en ce que**
il est prévu au moins une paire de chariots de transport (14) coopérant entre eux, dont les zones de réception (28) forment conjointement une zone de réception commune, latéralement en porte-à-faux, pour les objets (10), en particulier, les deux chariots de transport (14) étant mobiles l'un par rapport à l'autre de telle sorte que les zones de réception (28) peuvent être éloignées du dessous des objets (10), afin de distribuer les objets (10).

9. Dispositif selon la revendication 8,
**caractérisé en ce que**
l'une au moins des zones de réception (28) des deux chariots de transport (14) est mobile par rapport à un moyen auxiliaire de distribution (58) coopérant avec les objets (10), lors de la distribution, en particulier le moyen auxiliaire de distribution (58) étant réalisé sous forme de racleur ou de fixateur.

10. Dispositif selon l'une au moins des revendications précédentes,
**caractérisé en ce que**
le dispositif de stabilisation (48) agit le long de toute la voie ou dans au moins une zone partielle de la voie.

11. Dispositif selon l'une au moins des revendications précédentes,
**caractérisé en ce que**
le dispositif de stabilisation (48) est disposé sur la voie.

12. Dispositif selon l'une au moins des revendications précédentes,
**caractérisé en ce que**
le dispositif de stabilisation (48) comprend au moins un élément de soutien (50), en particulier un élément d'appui, pour le support, en particulier l'élément de soutien (50) pouvant être mis en engagement avec une face inférieure du support (12).

13. Dispositif selon l'une au moins des revendications précédentes,
**caractérisé en ce que**
le dispositif de stabilisation (48) est réalisé actif ou passif.

14. Dispositif selon l'une des revendications précédentes,
**caractérisé en ce que**
dans au moins un chariot de transport (14), au moins un élément de montage au moins localement élastiquement déformable est prévu entre le support (12) et le curseur (16), de préférence, l'élément de montage étant réalisé sous forme d'axe de planche à roulettes, en particulier, le support (12) étant fixé à au moins deux curseurs (16) par l'intermédiaire d'un élément de montage respectif élastiquement déformable.
